(19) **Europäisches Patentamt**
**European Patent Office**
**Office européen des brevets**

(11)  **EP 1 936 837 B1**

(12)  **EUROPEAN PATENT SPECIFICATION**

(45) Date of publication and mention
of the grant of the patent:
**17.06.2009  Bulletin 2009/25**

(51) Int Cl.:
***H04B 7/26*** (2006.01)

(21) Application number: **06026485.0**

(22) Date of filing: **20.12.2006**

(54) **Apparatus for synchronizing a first transmit and receive device to a second transmit and receive device**

Vorrichtung zum Synchronisieren eines ersten Sende- und Empfangsgeräts mit einem zweiten Sende- und Empfangsgerät

Appareil de synchronisation d'un dispositif de transmission/réception à un autre dispositif de transmission/réception

(84) Designated Contracting States:
**DE GB**

(43) Date of publication of application:
**25.06.2008  Bulletin 2008/26**

(73) Proprietor: **NTT DoCoMo Inc.**
**Chiyoda-ku**
**Tokyo 100-6150 (JP)**

(72) Inventors:
• **Tyrrell, Alexander**
**85356 Freising (DE)**
• **Auer, Gunter**
**80339 München (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
• **ALEXANDER TYRRELL, GUNTHER AUER AND CHRISTIAN BETTSTETTER: "Firefly Synchronization in Ad Hoc Networks" 3RD MINEMA WORKSHOP, LEUVEN, BELGIUM, 7TH OF FEB. 2006, 7 February 2006 (2006-02-07), pages 1-4, XP009087928**
• **ALEXANDER TYRRELL, GUNTHER AUER AND CHRISTIAN BETTSTETTER: "Firefly Synchronization in Ad Hoc Networks" PROCEEDINGS OF MINEMA WORKSHOP, February 2006 (2006-02), pages 1-4, XP001247382**
• **ALEXANDER TYRRELL, GUNTHER AUER AND CHRISTIAN BETTSTETTER: "Fireflies as Role Models for Synchronization in Ad Hoc Networks" FIRST BIO-INSPIRED MODELS OF NETWORK, INFORMATION AND COMPUTING SYSTEMS, 11 December 2006 (2006-12-11), - 13 December 2006 (2006-12-13) pages 1-7, XP009084939 Madonna di Campiglio, Italy**
• **MIROLLO R E ET AL: "SYNCHRONIZATION OF PULSE-COUPLED BIOLOGICAL OSCILLATORS" SIAM JOURNAL OF APPLIED MATHEMATICS, XX, XX, vol. 50, no. 6, December 1990 (1990-12), pages 1645-1662, XP009084945**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Background

The present invention relates to the field of network synchronization and in particular to the field of self-organized timing synchronization of wireless networks.

Network synchronization is an enabler for TDD systems. All nodes in the network need to agree on a common time slotted structure, where the start of a time slot corresponds to the start of a frame. Furthermore, the deployment of a synchronized network also provides benefits in FDD System such as improved interference management and higher multi-user throughput.

Some of the known synchronizations strategies are based on a spontaneous synchronization phenomenon observed in nature, for example in South East Asia, where huge swamps of fire flies are blinking in perfect synchrony. In a previous European patent application, post-published patent application no. 05 01 5250, published as EP-A-1 744 472, this model was adapted to wireless networks and improved the achievable accuracy when considering transmission delays. This invention known as the Time Advance Strategy, improved the accuracy by splitting the nodes into two groups and typical applications of this scheme includes ad hoc networks, where each node plays a similar role. With this algorithm, the formation of these two groups is random, and cannot be controlled.

In a cellular network, where nodes are either Base Stations (BSs) or User Terminals (UTs), if the Time Advance Synchronization Strategy is directly applied, a process needs to be put into place in order to ensure that all base stations form one group and user terminals a second group.

A previous European patent application, post published patent application no. 05 02 7911 published as EP-A-1 802 013, also concerned two groups of oscillators: one group tried imposing its timing reference onto all other nodes. The major difference with the scheme presented in the latter patent application is that the reference group was synchronized.

Obtaining a synchronized network can, thus, be done in a centralized manner if a global reference time is provided. This can be done by several means, for example by relying on the Global Positioning System (GPS) or the European Satellite Navigation System (Galileo). With these systems an accuracy of 100 ns is achievable when one satellite is in line-of-sight and of a few nanoseconds when four satellites are visible, as described by W. Lewandowski and C. Thomas, "GPS tune transfer," Proc. of the TEEE, vol. 79, no. 7, w 991-999, Jul. 1991, in the following referred to as [1].

Another means is, for example relying on the Network Synchronization Protocol (NTP). To deploy this protocol, NTP servers are distributed in the backbone network, and periodically send time Information, as described by D. Mills, "Internet time Synchronization: the network time protocol," IEEE Transactions an Communications, vol. 39, pp. 1482-1493, Oct. 1991, in the following referred to as [2]. Upon reception, base stations update their time reference. This protocol also yields high accuracy.

However, these latter synchronization techniques are all centralized solutions.

It is the object of the present invention to provide an apparatus and a method for self-organized or decentralized synchronization of two predefined groups.

This object is achieved by an apparatus for synchronizing a first transmit and receive device to a second transmit and receive device according to claim 1, a method for synchronizing a first transmit and receive device to a second transmit and receive device according to claim 14.

The present invention provides an apparatus for synchronizing a first transmit and receive device to a second transmit and receive device, the apparatus being located in the first transmit and receive device, the apparatus comprising:

a receiver implemented to receive the first synchronization signal from the second transmit and receive device, the first synchronization signal corresponding to a first predetermined group, to which the first transmit and receive device does not belong to:

a transmitter implemented to transmit a second synchronization signal, which is different from the first synchronization signal, and corresponds to a second predetermined group to which the first transmit and receive device belongs to, wherein the second synchronization signal is after a synchronization time in synchronism with the first synchronization signal from the second transmit and receive device;

a processing unit implemented to increase an internal signal value according to a given first function over time, to modify the internal signal value upon receiving the first synchronization signal according to a second function and to compare the internal signal value with a given threshold value when the apparatus is in a listen state wherein the processing unit is further implemented:

to control the receiver to be ready to receive the first synchronization signal from the second transmit and receive device in the listen state, and

to control the transmitter to transmit the second synchronization signal in a transmit state which begins after the internal signal value has reached the threshold value.

The present invention, furthermore, provides a method for synchronizing a first transmit and receive device to a second transmit and receive device, comprising the following steps:

receiving in a listen state a first synchronization signal from the second transmit and receive device, the first synchronization signal corresponding to a first predetermined group to which the first transmit and receive device does not belong to;

increasing in the listen state an internal signal value, according to a given first function over time;

modifying in the listen state the internal signal value upon receiving the first synchronization signal according to a second function;

comparing in the listen state the internal signal value with a given threshold value; and

transmitting a second synchronization signal at the earliest begins after the internal signal value has reached the threshold value, wherein the second synchronization signal is different from the first synchronization signal and corresponds to a second predetermined group to which the first transmit and receive device belongs to, wherein the second synchronization signal is after a synchronization time in synchronism with a first synchronization signal from the second transmit and receive device.

The present invention is based on the finding that by using two different synchronization signals and be defining two types of nodes, one which transmits a "first" synchronization signal and adapts its internal signal value when having received a "second" synchronization signal, and a second type of node, transmitting the "second" synchronization signal and adapting its internal signal value when receiving the "first" synchronization signal, a synchronization of all nodes can be achieved, while at the same time forcing the nodes of the same type into the same predefined group.

A solution is provided which takes advantage of the separation into two groups in order to correctly split BSs and UTs.

Furthermore, by choosing appropriate time settings, also a predetermined time offset between these two groups with respect to the time instant the nodes of the two groups transmit the synchronization signals can be achieved.

With regard to the WINNER system, based on embodiments of the invention intra-cell synchronization, i.e. the synchronization of user terminals (UT) to their serving base station (BS), and inter-cell synchronization, i.e. the synchronization between base stations can be achieved.

Technical requirements of the WINNER-system will be discussed later in more detail.

In further embodiments, nodes, for example user terminals are implemented to additionally adapt their internal signal value when having received synchronization signals transmitted from other user terminals. As will be shown later, this helps to achieve higher synchronization rates.

Other embodiments comprise additionally wait states and/or refractory states to achieve higher synchronization rates and more stable synchronization.

Embodiments of the present invention can be adapted, by adjusting the timings, to comply with any implementation of the super-frame and the respective preamble of the WINNER system. It is obvious for a person skilled in the art that many other frame structures, including the usage of preamble, mid-amble or post-amble schemes can be implemented by using embodiments of the present invention.

Thus, embodiments of the present invention provide a very flexible synchronization scheme while at the same time maintaining the original simplicity of the integrate-and-fire oscillator.

Embodiments of the present invention are described in detail with respect to the following figures, in which

Fig. 1A shows an exemplary Phase Diagram of an integrate-and-fire oscillator;

Fig. 1B shows a pie chart of an integrate-and-fire oscillator according to Fig. 1A;

Fig. 2A shows a synchronization of two integrate-and-fire oscillators;

Fig. 2B shows an exemplary synchronization of two integrate-and-fire oscillators based on a pie chart representation;

Fig. 2C shows how the phase increment is obtained from the phase response curve;

Fig. 2D shows a diagram plotting an exemplary integration function and an exemplary phase response curve;

Fig. 3A shows a state machine of a node using the Time Advance Strategy;

Fig. 3B shows a diagram plotting a phase over time for a node using a state machine according to Fig. 3A;

Fig. 3C shows an exemplary channel model with propagation delay;

Fig. 4A shows an exemplary pie chart for a Time Advance System state when node A starts transmitting;

Fig. 4B shows an exemplary Time Advance System state when a receiver of a node A has successfully received and decoded a synchronization signal;

Fig. 4C shows an exemplary pie chart for a Time Advance System state when a node A switches on its receiver;

Fig. 4D shows and exemplary pie chart illustrating a decomposition of receivers and transmitters with a Time Advance Strategy;

Fig. 5 shows a WINNER super-frame structure;

Fig. 6 shows embodiments of the invention adapted to the WINNER super-frame preamble;

Fig. 7A shows a pie chart for describing a possible scenario where two times two groups form and cannot communicate as it mostly appears in sparse networks;

Fig. 7B shows a pie chart for describing a scenario where two times two groups form and cannot communicate as it can appear when transmission delays are large;

Fig. 8 shows two possible network topologies NW1 (left-hand side) and NW2 (right-hand side), respectively composed of 20 and 12 nodes;

Fig. 9 shows a table comprising the synchronization rates and mean times to synchrony for the two networks shown in Fig. 8 for different user terminal to user terminal couplings;

Fig. 10A shows an exemplary block diagram of an embodiment of the inventive apparatus;

Fig. 10B shows a state machine describing the states of embodiments of the inventive apparatus;

Fig. 11 shows embodiments of the present apparatus adapted to the WINNER super-frame.

Before embodiments of the present invention are described in detail, the following terms and their respective relations are introduced. The inventive apparatus may also be called a pulse-coupled-oscillator or integrate-and-fire oscillator. In certain embodiments the internal signal value may also be referred to as phase $\Phi$, the threshold value as $\Phi_{threshold}$, the first function as phase function, integration function, or increment function, and the second function as phase response curve $\Delta(\Phi)$.

The term node may refer to an embodiment of the inventive apparatus or generally to an inventive transmit or receive device. The synchronization signal may also be referred to as pulse, message, or synchronization burst. The second function may also be referred to as coupling function.

Before describing specific embodiments for the WINNER super-frame, the underlying concept of the fire-and-integrate oscillator is explained to provide a better understanding for embodiments of the invention in general.

An interesting example of self-organized systems can be found in South-East Asia alongside riverbanks. At dawn fireflies gather on trees and synchronize their blinking, making it seem as though the whole tree is flashing in perfect synchrony. A mathematical approach to describe such synchronizations is based on the concept of "pulse-coupled oscillators", assuming that the fireflies form a fully meshed network and communicate through pulses. The term "pulse-coupled oscillators" refers to systems that oscillate periodically in time and interact each time they complete an oscillation.

This interaction takes the form of a pulse that is perceived by neighboring oscillators. These systems are known to show different behaviors ranging from perfect synchrony to pattern formation

In the following it will be described how time synchronization is achieved between pulse-coupled oscillators. First, a mathematical model will be associated to these oscillators. Then it will be examined how two or more pulse-coupled oscillators can synchronize to pulse as one.

As a simple mathematical model or representation, a pulse-coupled oscillator is described only by its phase function $\Phi(t)$. This function evolves linearly over time until it reaches a threshold value $\Phi_{threshold}$. When this happens, the oscillator fires, and resets its phase. Thus, if not coupled with any other oscillator, it will fire with a period equal to T, in the following this period will, therefore, be also referred to as phase function period T or oscillator period T.

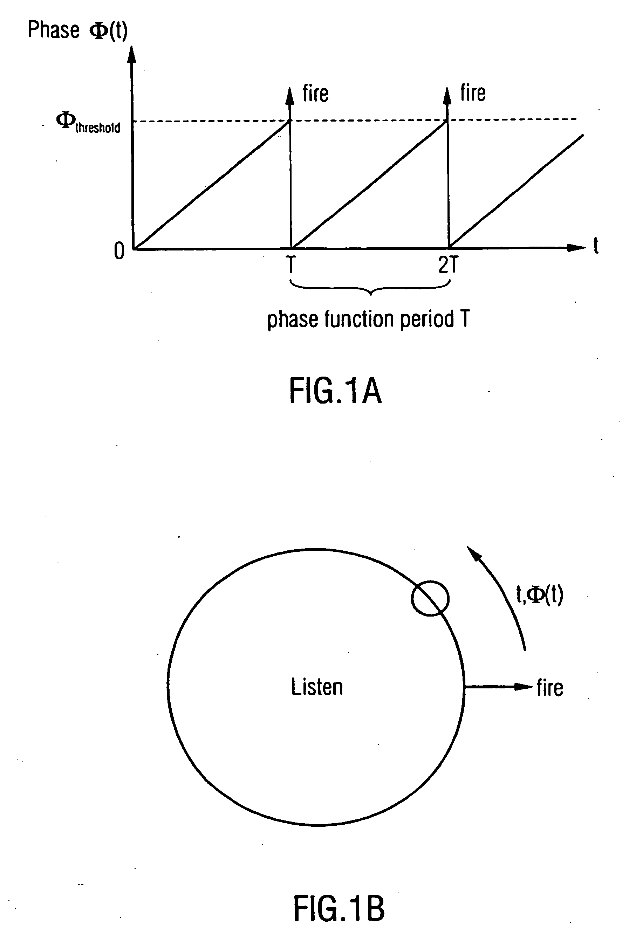

Due to the evolution of this function, these oscillators are also referred to as integrate-and-fire oscillators. Fig. 1A shows the evolution of the phase function of an isolated oscillator.

Fig. 1B shows a pie chart as a second representation of an integrate-and-fire oscillator. The oscillator can be considered as rotating counter-clockwise on a circle as shown in Fig. 1B, each position on said circle representing a phase $\Phi(t)$ during a listen state and firing after completion of a circle. The phase can be also considered as an internal clock.

This model approximates the behavior of a biological pulse-coupled oscillator. The firing instant corresponds to an emission of light for a firefly, to an electrical impulse for a neuron or a transmission of a synchronization signal for a node. In the following one will see how such oscillators are able to synchronize by modifying their phase function when receiving a pulse.

Based only on a phase function, two identical oscillators are able to synchronize their firing instant within a few periods. To achieve this, an oscillator modifies its phase when receiving a pulse from another integrate-and-fire oscillator.

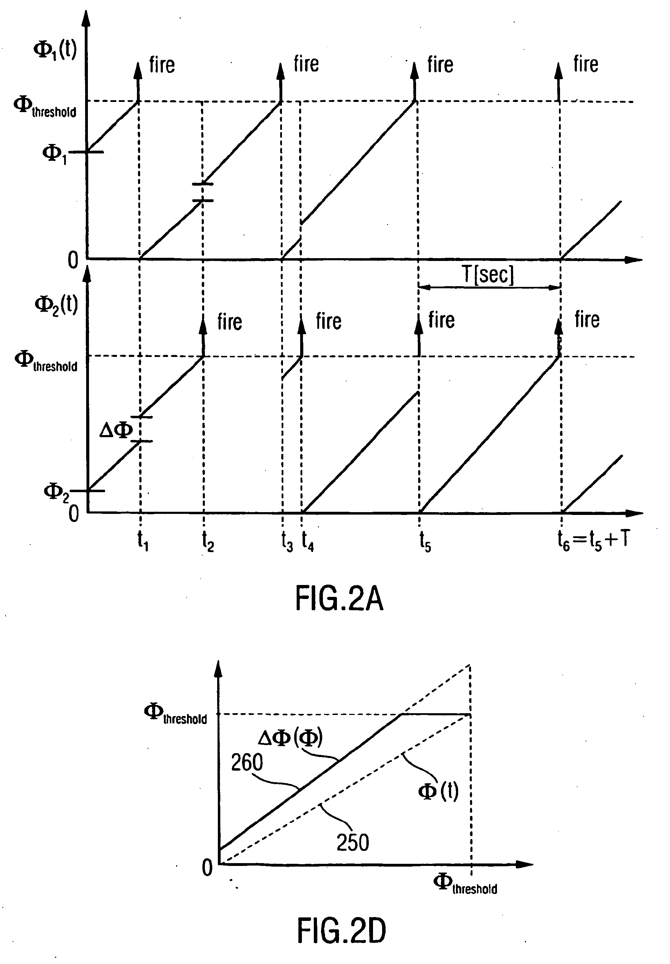

Fig. 2A shows how two oscillators can synchronize using this scheme. At instant 0, the oscillators are not synchronized. Their initial phases, $\Phi_1$ and $\Phi_2$, are randomly distributed between 0 and $\Phi_{threshold}$. At this time, each oscillator increments its phase linearly over time until one of them reaches $\Phi_{threshold}$. At $t_1$, oscillator 1 is the first to reach the threshold. It fires a pulse and resets its phase. As the oscillators are coupled, oscillator 2 will then increment its own phase. The increment is determined by the Phase Return Curve (PRC) $\Delta(\Phi)$. Comments on this function will be made later. At $t_2$, oscillator 2 fires, and oscillator 1 increases its phase accordingly. This scheme goes on until $t_5$ where the firing of oscillator 1 causes oscillator 2 to fire at the same instant. At this time, both oscillators are synchronized. At $t_6 = t_5 + T$, they fire at the same instant.

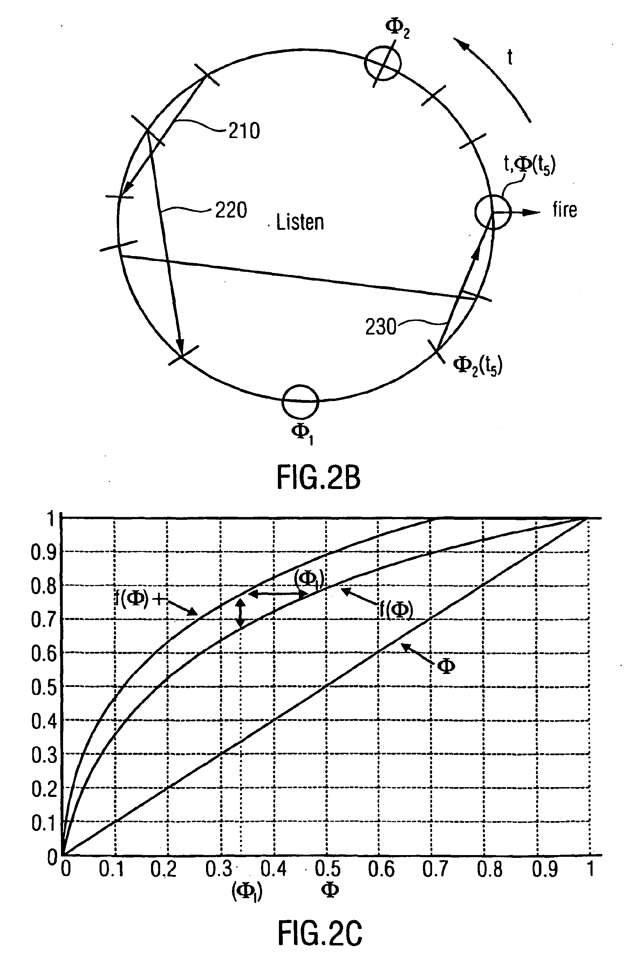

Fig. 2B shows a pie chart for a scenario with two integrate-and-fire oscillators with respective phases $\Phi_1$ and $\Phi_2$. When an oscillator fires, it immediately transmits a pulse.

Initially both oscillators are independent or isolated, their phase $\Phi$ will increment linearly over time. If coupled to each other, the firing of one oscillator will cause the other oscillator to instantly increment its phase by an amount that depends on the current phase, $\Delta(\Phi)$ being the phase increment:

$$\Phi \rightarrow \Phi + \Delta(\Phi)$$

Exemplary phase increments are depicted in Fig. 2B by the reference signs 210, 220 and 230. Phase increment 230 shows a situation as depicted in Fig. 2A at instant $t_5$, where the first oscillator fires ($\Phi_1(t_5) = \Phi_{threshold}$) and, thus, causes the second oscillator upon reception of the pulse of the first oscillator ($\Phi_2(t_5) < \Phi_{threshold}$) to increment its phase, which also equals $\Phi_{threshold}$ after performing the increment.

This simple type of interaction leads to synchronization whatever the initial conditions are. To do so, the increment $\Delta(\Phi)$ needs to be chosen based on a function $f(\Phi)$, where $f(\Phi)$ needs to be concave down for the oscillators to synchronize. The chosen function is

$$f(\phi) = \frac{1}{b}\ln(1 + [e^b - 1]\phi) \, .$$

For each oscillator, the function f plays the role of an amplitude. When an oscillator receives a pulse, it raises its amplitude by an amount $\varepsilon$, $\varepsilon > 0$. This is equivalent to an increase in phase $\Delta(\Phi)$. Fig. 2C shows how the phase increment $\Delta(\Phi)$ is obtained from the phase response curve for b = 3 and $\varepsilon$ = 0.1 (for a normalized phase $\Phi$ and $\Phi_{threshold}$ = 1).

Fig. 2D shows an example for the two functions describing the behavior of an integrate-and-fire oscillator, wherein reference sign 250 refers to the integration or incrementing function for phase $\Phi(t)$, and wherein reference sign 260 refers to a linear phase response curve $\Delta\Phi(\Phi)$. Thus, based only on this simple model, two or more identical oscillators are able to synchronize their firing instant within a few periods.

$\Delta\phi$ is determined by the Phase Response Curve (PRC), which can be chosen to be linear, for example, as follows:

$$\phi + \Delta\phi = \min(\alpha \cdot \phi + \beta, 1) \quad \text{with} \quad \begin{cases} \alpha = \exp(b \cdot \varepsilon) \\ \beta = \dfrac{\exp(b \cdot \varepsilon) - 1}{\exp(b) - 1} \end{cases}$$

wherein $b$ is the dissipation factor and $\varepsilon$ is the amplitude increment. Both factors determine the coupling between oscillators. The threshold $\phi_{threshold}$ is normalized to one.

If the network is fully meshed, the system always converges, i.e. all oscillators will fire as one, for $b > 0$ and $\varepsilon > 0$. The time to synchrony is inversely proportional to the product $b \cdot \varepsilon$.

This model, as explained previously, presents the simplest mathematical interpretation of pulse-coupled oscillators that leads to synchrony.

In a wireless environment pulses are hardly considered for communication, because they are difficult to detect. This original framework was adapted to fit communications through bursts or sequences of pulses of a certain duration, as described by A. Tyrrell, G. Auer, and C. Bettstetter, "Firefly synchronization in ad hoc networks", in Proc. of 3rd MiNEMA workshop, Feb. 2006, in the following referred to as [4]. This scheme is referred to as the Time Advance Synchronization scheme. The Time Advance Synchronization strategy describes how time synchronization can be obtained in a distributed fashion when considering a fully meshed network. Time synchronization is defined as aligning local time units in order to define a common slot structure among all nodes. The Time Advance Synchronization scheme will be described later in more detail.

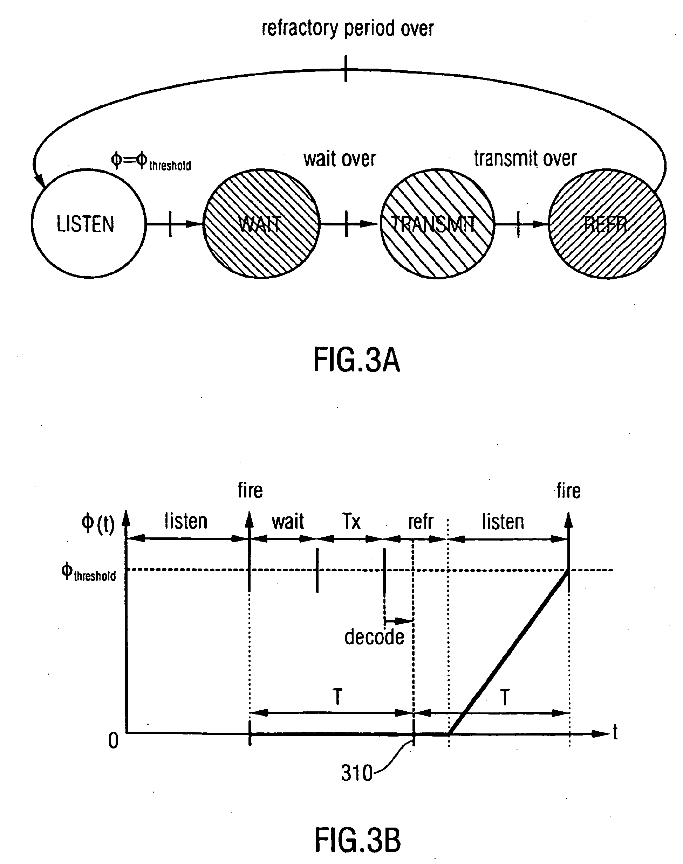

Previous work showed that transmission delays such as the duration of a synchronization word ($T_{Tx}$) and the decoding delay required by a receiver to process the received message ($T_{dec}$) affect the attainable accuracy of the original firefly synchronization scheme [4]. To combat this negative effect, a waiting state was added to the finite state machine of a node. The state machine describing one node following the Time Advance Synchronization scheme is shown on Fig. 3A.

The state machine comprises four states LISTEN, WAIT, TRANSMIT and REFR (REFRACTORY). During a listen state LISTEN a node increments the phase $\Phi$ according to the integration function and listens for a listening-time $T_{listen}$ for pulses of other nodes. Upon reception of a pulse the node increases the phase according to the phase response curve. The node fires, or in other words reaches the firing state, as soon as phase $\Phi$ reaches the threshold value, i.e. $\Phi = \Phi_{threshold}$. At this event (fire) the node resets the phase to zero, changes to a waiting state WAIT and waits there for a waiting time $T_{wait}$ associated to the waiting state. During the waiting state the node neither listens to pulses of other nodes nor transmits itself a pulse.

When the waiting time is over (event: wait over), the node changes to a transmitting state TRANSMIT and starts itself transmitting a pulse or synchronization signal having a synchronization signal length $T_{Tx}$. After transmission of the synchronization signal (event: transmit over) the node changes into a refractory state REFR. The node remains for a refractory time $T_{refr}$ in the refractory state. After the refractory time is over (event: refractory period over) the node changes again into the listen state.

Fig. 3B shows an exemplary diagram of a phase $\Phi(t)$ over time t. The node first listens (listen) for synchronization signals of other nodes and increments its phase, after reaching the threshold value, the node fires (fire) and waits (wait) the waiting time before transmitting (Tx) the synchronization signal. After transmitting, the node changes to the refractory state (refr) and afterwards changes again into the listen state (listen). Fig. 3B shows a scenario where a propagation delay To can be neglected. The waiting time $T_{wait}$ is defined as:

$$T_{wait} = T - (T_{Tx} + T_{dec}),$$

wherein $T_{dec}$ is a decoding time.

Another node receiving the synchronization signal will start decoding the synchronization signal after having fully received the synchronization signal, the required time for decoding being said decoding time $T_{dec}$, and will increment its phase exactly T seconds after the first node has fired 310.

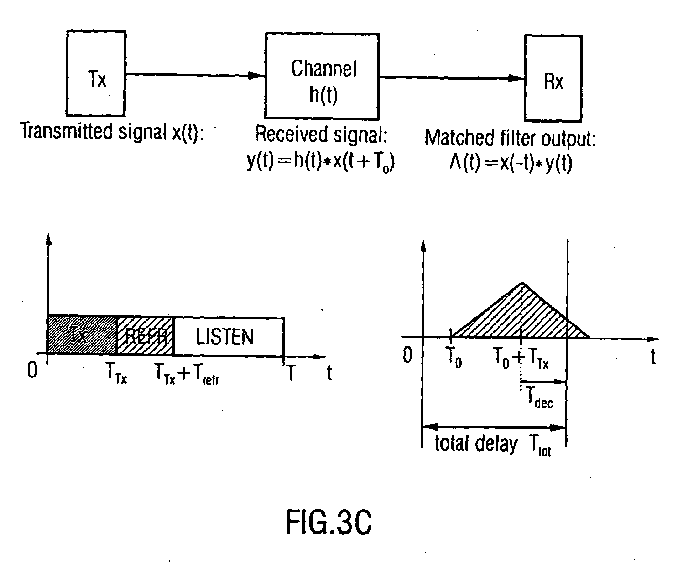

The upper part of Fig. 3C shows an exemplary transmission model with a transmitter Tx transmitting a signal x(t) over a channel with a channel function h(t) to a receiver Rx. The signal y(t) received by the receiver Rx can be written as:

$$y(t) = h(t) * x(t + T_0) \, ,$$

with To being the propagation delay caused by the channel. The output of a matched filter applied to the received signal can be described as follows:

$$\Lambda(t) = x(-t) * y(t) \, .$$

The lower left side of Fig. 3C shows a sequence of states over time, starting with a transmission Tx lasting a transmission time $T_{TX}$ followed by a refractory state and a listen state. The lower right side of Fig. 3C shows the total delay $T_{tot}$ between the actual start of a transmission of a node and a respective increase of a phase of another node, taking into account propagation delay To, a synchronization signal length or transmission time $T_{Tx}$ and the decoding time $T_{dec}$. Taking into account the aforementioned delays means that the reception of the synchronization signal occurs

$$T_{tot} \; = \; T_0 \; + \; T_{Tx} \; + \; T_{dec}.$$

Referring back to fig. 3A and the previous explanations about the fire-and-integrate oscillator, the synchronization principle using the Time Advance Synchronization Scheme can be summarized as follows.

During listen, if a message is finished being received and decoded at time $t = \tau_j$, the phase function of node i, denoted $\Phi_i$, which increments linearly over time from 0 to a threshold value $\Phi_{threshold}$, is incremented by an offset which depends on the current phase value [4]:

$$\phi_i(\tau_j) + \Delta\phi(\phi_i) = \min(\alpha \cdot \phi_i(\tau_j) + \beta, 1) \tag{1}$$

where both factors $\alpha$ and $\beta$ determine the coupling between oscillators, and are identical for all. The threshold $\Phi_{threshold}$ is normalized to 1. This phase adjustment is the only moment when interactions between nodes is made, and leads to the creation of two groups firing T seconds after the other [4].

Referring to nodes according to a time advance scheduling as shown in Fig. 3A, to visualize the duration of each state a system of N nodes can be represented as markers circling around a pie chart. The natural oscillatory period for one oscillator according to the time advance scheme is equal to 2·T.

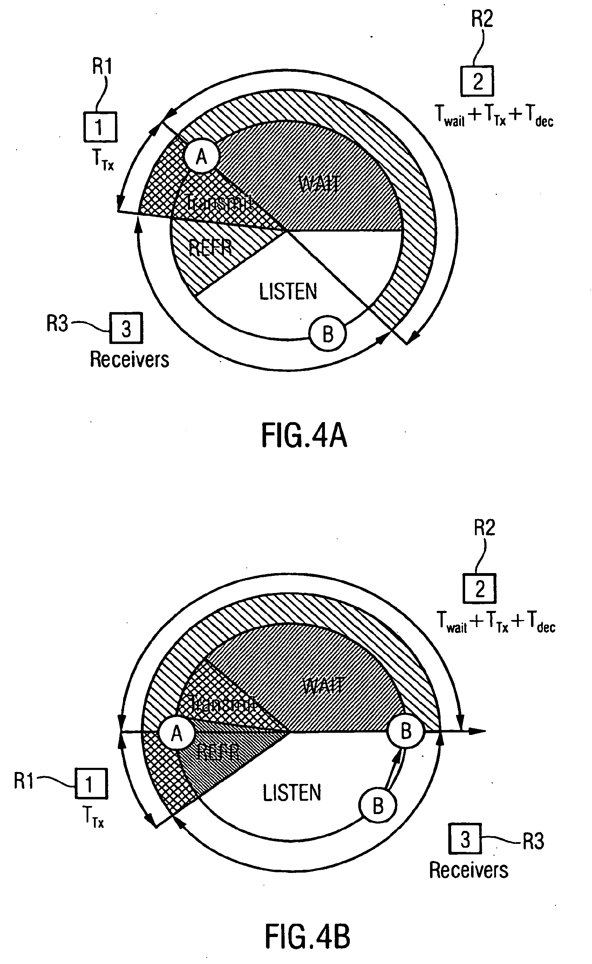

Therefore one full rotation around this pie chart is equal to 2.T. The size of each state is proportional to $T_{wait}$, $T_{Tx}$, $T_{refr}$ and $T_{Rx}$. Such a representation is shown on Figs. 4A and 4B with $T_{Rx}$ = 0.8·T, $T_{wait}$ = 0.75·T, $T_{Tx}$ = 0.2·T and $T_{refr}$ = 0.25·T, wherein $T_{wait}$ is a waiting time associated to the wait state, $T_{Tx}$ is a synchronization signal length or transmission time associated to the transmit state, wherein $T_{Rx}$ is a listen time associated to the listen state and wherein $T_{refr}$ is a refractory time associated to a refractory state.

To understand how such a system of N nodes that is initially unsynchronized is able to form two groups firing exactly T seconds apart after some time, the evolution of one node A, will be studied. As a node is alternatively transmitter and receiver, node A will first be studied when it is transmitting and then when it is receiving.

Fig. 4A represents a system based on the time advance system when node A starts transmitting after leaving the wait state. Fig. 4A shows the four control states WAIT, TRANSMIT, REFR and LISTEN according to Fig. 3A.

At this instant all nodes that are transmitting have their receiver switched off and will not be able to receive the beginning of the message of node A. This group is labeled R1. Nodes who are listening but who will fire within $T_{Tx}$ + $T_{dec}$ and nodes who are waiting will also not be able to fully receive and decode the synchronization message of node A. This region is labeled R2.

Hence only the nodes in the region labeled R3 will be able to fully interpret the synchronization message that is transmitted. They will have received and decoded the message $T_{Tx}+T_{dec}$ after node A started transmitting. This instant is represented on Fig. 4B. Node B is part of R3, and at this instant, it will increment its phase by $\Delta\Phi(\Phi_B)$, which causes it to fire immediately. Its marker will then be diametrically opposed to the marker of node A. The two nodes will therefore fire exactly T seconds apart from one another, in other words, these two nodes are synchronized.

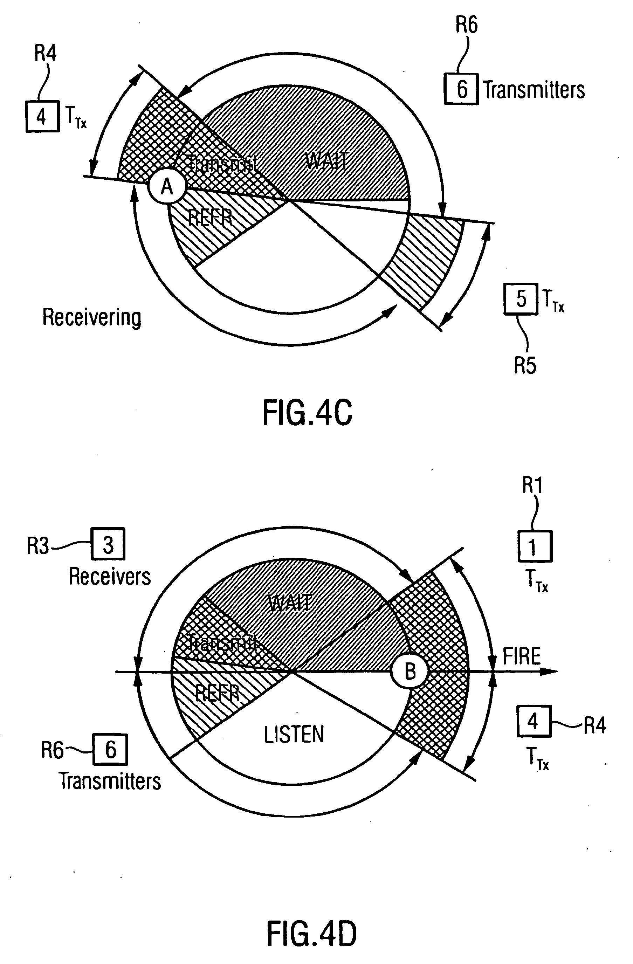

Fig.4C represents the system when node A switches on its receiver. As node A starts receiving, it will have missed the messages that were being transmitted while it was transmitting and in a refractory state. Therefore node A will be deaf to messages of nodes whose state is within region R4.

Node A will be able to receive any message that is being transmitted as it is in listening states, or in other embodiments as it is in refractory or listening states.

However if a message starts being transmitted $T_{Tx} + T_{dec}$ or less before it fires, then it will not be fully received and decoded. This region is labeled R5.

Hence node A will be able to fully receive and decode synchronization messages from transmitters whose states are in region R6. When node A receives a message from a transmitter in region R6, it will progressively shift its state towards the diametrically opposed state.

To summarize the evolution of states for node A, important regions are gathered on Fig. 4D as node A is firing.

Fig. 4D shows based on a pie chart the decomposition of receivers and transmitters with the time advance strategy.

The nodes in region R3 will be able to hear messages of node A and will progressively shift their state towards the diametrically opposed point to node A. Inversely the messages of nodes in region R6 will be heard by node A and will progressively shift to the diametrically opposed state to node A. Synchronization with the Time Advance scheme is declared when 2 groups diametrically opposed on the pie chart representation form and their firing instants are spaced T seconds apart.

When a system is synchronized, all nodes are in a stable equilibrium state, because if a node from one group moves slightly from its synchronized state, the diametrically opposed group will either join the new state or force the offset node to go back to the equilibrium position.

On the other hand, node A is not able to receive nor influence nodes whose states are within regions R1 or R4. In order for these nodes to synchronize, an external node from region R3 or R6 forces them to synchronize by merging into one group when they receive its message. A system where all nodes are within regions R1 or R4 will never be able to successfully synchronize.

In other words, they are deaf to each other's synchronization signals. Therefore, regions R1 and R4 are also referred to as deafness region, deaf spots deafness cone.

In the following embodiments for the network synchronization in the WINNER system will be discussed.

As described before, a previous patent application also concerned two groups of oscillators: one group tried imposing its timing reference onto all other nodes. The major difference with the scheme presented in the latter patent application is that the reference group was synchronized, whereas base stations are initially not mutually synchronized in the "WINNER system". The objective of the WINNER project an system is to identify key technologies for a future broadband radio interface, to develop basic concepts based on these technologies that will lead to a ubiquitous radio system concept, and perform assessments thereof.

Within the WINNER system which shall support TDD and FDD, for TDD all nodes in the network need to agree on a common time slotted structure, where the start of a time slot corresponds to the start of a super-frame. Furthermore, the deployment of a synchronized network also provides benefits in FDD based WINNER systems such as improved interference management and higher multi-user throughput.

Within the WINNER system, nodes in the network, thus, need to agree on a common time reference for transmission, which indicates the beginning of a super-frame. Within a cellular network, base stations are in charge of maintaining users synchronized, and inter-cell synchronization is needed. In the peer-to-peer mode where a base station may not be present, synchronization among participants needs to be achieved in a decentralized manner.

Obtaining a synchronized network can be done in a centralized manner if a global reference time is provided. This can be done by several means, for example by relying on the Global Positioning System (GPS) or the European Satellite Navigation System (Galileo), or based on NTP, as discussed in the beginning.

However, these synchronization techniques are not well suited for the WINNER System. There are several reasons for this. For example, the GPS / Galileo methods impose constraints on cost and size, and the NTP imposes that NTP servers are connected to the base stations.

Furthermore, from the system requirements of WINNER 1, inter-site time synchronization is not a requirement, and Operation without it shall be possible, as described by IST-2003-507581, "D7.1 system requirements", WINNER, Tech. Rep., 2004, and in the following referred to as [3]. Hence, the owner or deployer of a network shall not be mandated to proactively create synchronization of the network. This means that unmanaged self-synchronization of the network could be an integral part of the system concept.

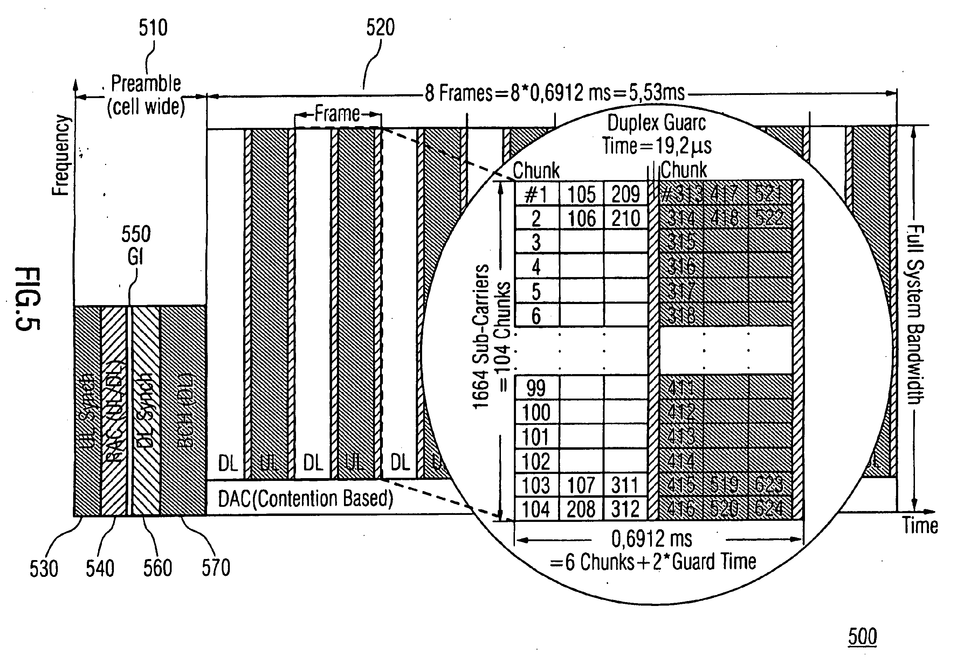

Within the first phase of the WINNER project, network synchronization was integrated into the system as described by IST-2003-507581, "D2.10 final report an identified RI key technologies, System concept, and their assessment," WINNER, Tech. Rep., 2005 and in the following described as [5]. The most noticeable contribution is the inclusion of two synchronization words within the preamble of the WINNER super-frame, which is depicted in Fig. 5.

The network synchronization procedure uses the two synchronization words as follows. The first sync word, labelled "ULSynch", is used by user terminals (UTs) to transmit a synchronization word that is received by Radio Access Points (RAP) to synchronize. In a similar fashion, the second sync word, labelled "DL Synch", is used by RAPs to broadcast a synchronization word that is used by UTs to synchronize. The terms radio access point and base station (BS) can be used as synonyms within the context of this document.

At first glance, this fits well into the synchronization scheme that was previously presented: two groups are created, each transmitting one after the other. However a major issue is that, as nodes are considered identical, the formation of the two groups is random and there is no way of controlling the separation into two groups.

A second problem is that the time difference between firing of each group is not the same. With the original algorithm, synchronized nodes fired T seconds after the others, and this symmetry was necessary for all nodes to be able to follow the same rules. However within the WINNER super-frame, this symmetry is not guaranteed, because the duration of each transmit length has not been fixed yet. Therefore it cannot be assumed that transmission of "DL Synch" is made at exactly half of the super-frame preamble.

Embodiments of the present invention provide a solution to the abovementioned problems, which will be discussed in the following.

The super-frame preamble of the WINNER system consists of five time slots: the transmission time slot for the uplink synchronization word "UL Synch" of duration $T_{UL,Synch}$ transmitted by UTs, the Random Access Channel time slot "RAC" of duration $T_{RAC}$, the Guard Interval time slot "GI" of duration $T_{GI}$, the transmission time slot for the downlink synchronization word "DL Synch" of duration $T_{DL,Synch}$ transmitted by BSs, and the Broadcast Channel time slot "BCH" of duration $T_{BCH}$ used by BSs to transfer information to members of the cell.

The sum of these time slots corresponds to the length of the preamble:

$$T_{preamble} = T_{UL,Synch} + T_{RAC} + T_{GI} + T_{DL,Synch} + T_{BCH} \qquad (2)$$

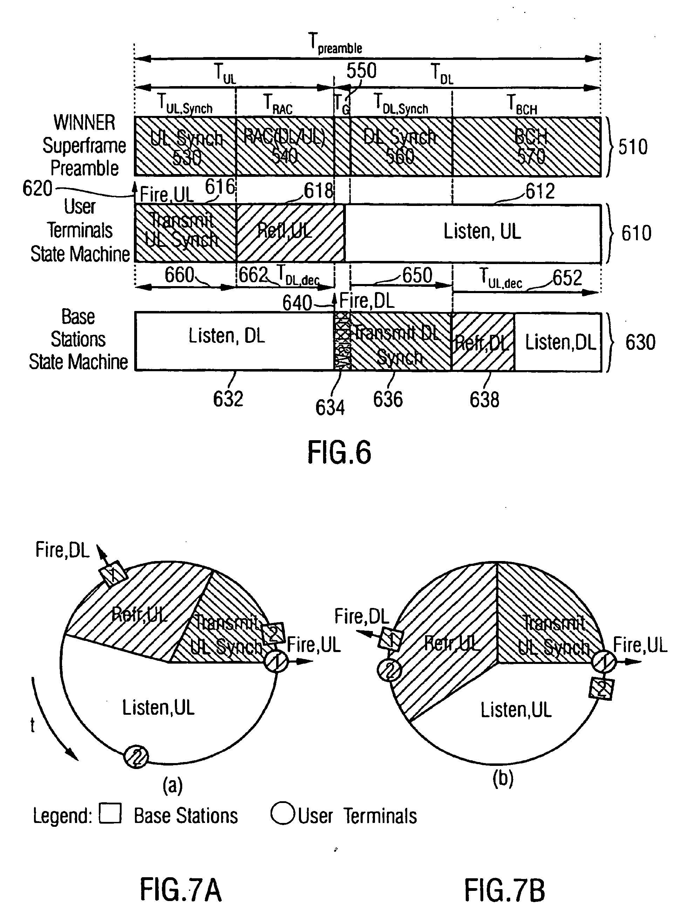

To force the formation of two groups, one formed by BSs and the other by UTs, the phase function of BSs is adjusted when detecting a transmission from UTs, and vice versa. Hence two synchronization words or signals are used. Fig. 6 shows the two state machines defined for BSs and UTs as well as the super-frame preamble structure, when nodes are synchronized.

Fig. 5 shows the WINNER super-frame with the preamble 510 and the payload part 520 of the super-frame 500. The preamble 510 comprises the uplink synchronization signal (UL Synch) timeslot 530, a Random Access Channel (RAC) timeslot 540, the Guard Interval (GI) timeslot 550, the Downlink synchronization signal (DL Synch) timeslot 560 and the Broadcast Channel (BCH) timeslot 570.

Fig. 6 shows the super-frame preamble 510 of Fig. 5 and respective embodiments of a user terminal state machine 610 and of a base station state machine 630. The super-frame preamble shows the uplink synchronization word time slot 530 with the respective duration $T_{UL,Synch}$, the random access channel timeslot 540 with its respective duration $T_{RAC}$, the guard interval timeslot 550 with its respective duration $T_{GI}$, the downlink synchronization word 560 with its respective duration $T_{DL,Synch}$, and the broadcast channel timeslot 570 with its respective duration $T_{BCH}$. The sum of the duration of the uplink synchronization word and the duration of the random access channel timeslot duration is defined as uplink duration $T_{UL}$ with $T_{UL} = T_{UL,Synch} + T_{RAC}$. The sum of the duration of the guard interval time slot, the duration of the downlink synchronization word timeslot and the duration of the broadcast channel timeslot is defined as downlink duration $T_{DL}$ with $T_{DL} = T_{GI} + T_{DL,Synch} + T_{BCH}$.

The user terminals state machine 610 comprises three states: a listen state 612 (listen, UL), a transmit state 616 (Transmit UL, Synch) and a refractory state 618 (Refr, UL).

The base stations state machine 630 comprises four states: a listen state 632 (Listen, DL), a wait state 634 (Wait, DL), a transmit state 636 (Transmit DL Synch) and a refractory state 638 (Refr, DL).

In a synchronized state, at the beginning of the super-frame preamble the user terminal is in the transmit state 616 and transmits the uplink synchronization word, wherein the duration of the transmit state 616 corresponds to the duration of the uplink synchronization word $T_{UL,Synch}$. After the transmission, the user terminal changes into the refractory state 618, wherein the duration of the refractory state 618 is longer than the duration of the random access channel timeslot $T_{RAC}$. The base station is in the listening state 636 at the beginning of the super-frame, receives the uplink synchronization word transmitted by the user terminal and uses the downlink decoding time $T_{DL,dec}$ for decoding the uplink synchronization word. After the successful decoding of the uplink synchronization word, i.e. after the downlink decoding time, the base station "fires" 640 (Fire, DL) and changes into the waiting state 634. After the waiting time associated to the wait state 634, which corresponds to the duration of the guard interval time slot $T_{GI}$, the base station changes to the transmit state 636 and starts transmitting the downlink synchronization word. The duration of the transmit state 636 corresponds to the duration $T_{DL,Synch}$ of the downlink synchronization word timeslot 560. After the refractory time associated to the refractory state 618, the user terminal enters into the listen state 612 and receives the downlink synchronization word transmitted by the base station. After a complete reception of the downlink synchronization word, the user terminal uses the uplink decoding time $T_{UL,dec}$ to decode the downlink synchronization word. After the uplink decoding time, the user terminal "fires" 620 (Fire, UL). The uplink decoding time of the user terminal corresponds to the duration $T_{BCH}$ of the broadcast channel timeslot 570.

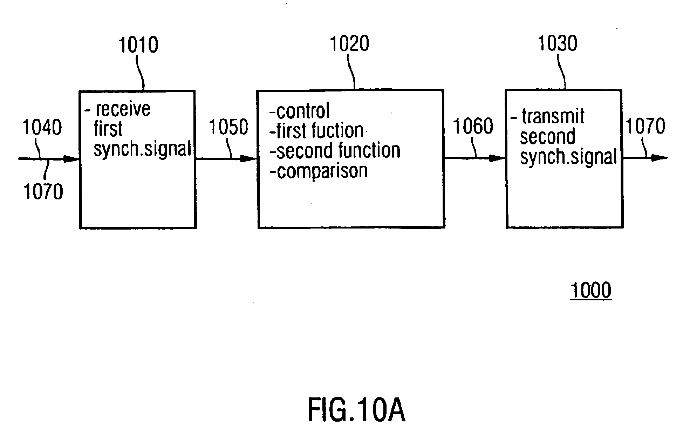

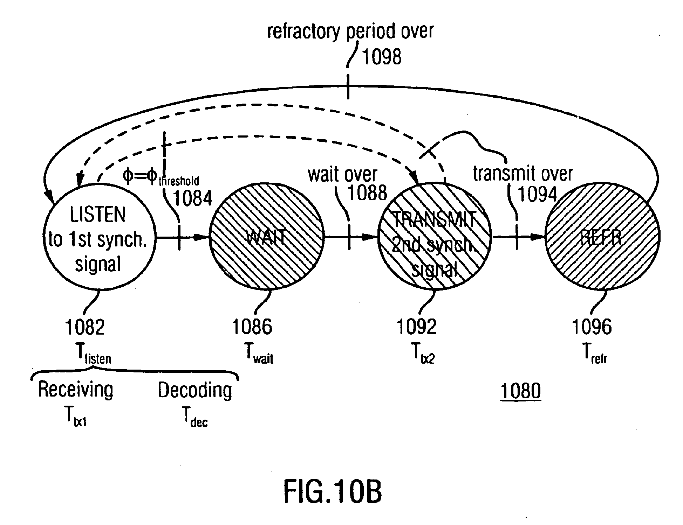

The state machines of the user terminals and the base stations and their interactions will be discussed in more detail based on the Figs. 10A and 10B later.

Interactions are only allowed between Base Stations and User Terminals, and key to separating nodes into two predefined groups is done in two parts:

Coupling at Base Stations (part 1) : if at instant $\tau_j$ a BS node i is in 'Listen' mode, where its phase function $\phi_i$ linearly increments over time, and a UT node j, which can communicate with i, started transmitting $T_{UL,Synch} + T_{DL,dec}$ before, then the receiving BS node i increments its current phase $T_{UL,Synch} + T_{DL,dec}$ before, then the receiving BS node i increments its current phase $\Phi_i$:

$$\phi_i(\tau_j) \rightarrow \phi_i(\tau_j) + \Delta\phi_{BS}(\phi_i(\tau_j)) \, where \, \Delta\phi_{BS}(\phi) = \alpha_{BS} \cdot \phi + \beta_{BS} \qquad (3)$$

Coupling at User Terminals (part 2): if at instant $\tau_i$, a UT node j is in 'Listen' mode, where its phase function $\phi_j$ linearly increments over time, and a BS node i, which can communicate with j , started transmitting $T_{UL,Synch} + T_{UL,dec}$ before, then the receiving UT node j increments its current phase $\phi_j$:

$$\phi_j(\tau_i) \rightarrow \phi_j(\tau_i) + \Delta\phi_{UT}(\phi_j(\tau_i)) \, where \, \Delta\phi_{UT}(\phi) = \alpha_{UT} \cdot \phi + \beta_{UT} \qquad (4)$$

Due to the deafness of each node, allowing only communication between UTs and BSs can cause the system not to synchronize. To resolve this, interactions among UTs is allowed, additionally

Coupling between User Terminals: if at instant $\tau_k$, a UT node j is in 'Listen' mode and another UT node *k*, which can communicate with j, started transmitting $T_{UL,Synch} + T_{UL}$-$_{UL,dec}$ before, then the receiving UT node j increments its current phase $\phi_j$:

$$\phi_j(\tau_k) \rightarrow \phi_j(\tau_k) + \Delta\phi_{UT\text{-}UT}(\phi_j(\tau_k)) \, where \, \Delta\phi_{UT\text{-}UT}(\phi) = \alpha_{UT\text{-}UT} \cdot \phi + \beta_{UT\text{-}UT} \qquad (5)$$

Thanks to this strategy, the formation of two groups, which was done randomly with the strategy summarized before, can now be controlled: starting from a random initial state, where all nodes fire randomly, after following the simple coupling rules, UTs and BSs separate over time into two predetermined groups, a BS group comprising only BS and a UT group comprising only UTs, wherein all BSs fire $T_{UL}$ after the UTs and all UTs fire $T_{DL}$ after the BSs. This state corresponds to a synchronized state.

When comparing the proposed solution with the previously described Time Advance Scheme, several advantages should be pointed out:

The proposed scheme ensures that two predetermined groups, namely User Terminals and Base Stations, form two groups.

The time difference between firing instants of each group does not have to be equal to half of the time of a full period.

To understand why coupling among UTs is preferable, stable states that are not synchronous are presented. Due to the deafness of each node as it is transmitting, a deafness cone of width $2 \cdot T_{DL,Synch}$, for BSs and $2 \cdot T_{UL,Synch}$ for UTs is still present, as on Fig. 4. This can lead nodes to form two clusters of two groups of nodes each that are entangled, i.e. two times two groups form and cannot communicate. This situation is exposed on Fig. 7.

On Figs. 7A and B, two situations are depicted.

On Fig. 7A, BSs and UTs of group 1 and members of group 2 are synchronized. However two clusters form because UTs of group 2 cannot communicate with BSs of group 1, which is due to lack of connectivity between these two groups. Hence the final state, which is stable, is not synchronous, and this case mostly appears in sparse networks, i.e. networks where BSs and UTs have few neighbors.

On Fig. 7B, two clusters of BSs and UTs labelled 1 and 2 are not synchronized, because BSs are within the deafness cone of UTs, and vice versa. This situation can appear when transmission delays are large.

In both cases, the final state, which is stable, is not synchronous. To avoid this situation, a further interaction is allowed by enabling coupling among User Terminals:

Thanks to this user terminal to user terminal (UT-UT) coupling, even when the network is sparse and two clusters are entangled as in Fig. 7A, as User Terminals usually have more neighbors than Base Stations, deafness is avoided.

The choice of $T_{UL-UL,dec}$ should be done such that coupling between BS-UT and UT-UT is not done with the same delay. A rule for choosing $T_{UL-UL,dec}$ is for this delay to be much shorter than $T_{UL,dec}$, such that cases of Fig. 7 are avoided quickly.

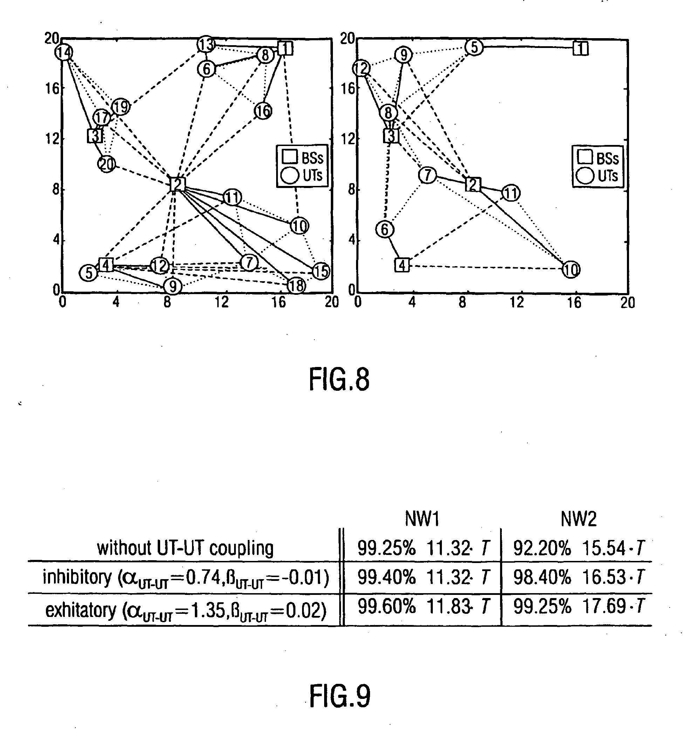

Simulations were performed over two network topologies, to verify the effectiveness of the coupling among UTs. The two topologies NW 1 and NW2, respectively composed of 20 and 12 nodes, are shown in Fig. 8.

Both networks have the same number of BSs, which is equal to four. Links in Fig. 8 are defined such that UTs communicate with two Base Stations and with two peers. Communication among BSs is not possible.

Delays are set to: $T_{UL,Synch} = 0.1 \cdot T$, $T_{refr,UL} = 0.25.T$, $T_{RAC} = 0.9 \cdot T$, $T_{GI} = 0.04 \cdot T$, $T_{DL,Synch} = 0.12 \cdot T$, $T_{Refr,DL} = 0.25 \cdot T$, $T_{BCH} = 0.84 \cdot T$, $T_{UL,dec} = 0.84 \cdot T$, $T_{DL,dec} = 0.9 \cdot T$ and $T_{UL-UL,dec} = 0.04 \cdot T$. In other words, for the above simulation $T_{DL,dec}$ is equal to $T_{RAC}$, as shown in Fig. 6, and $T_{RAC} + T_{UL,Synch} = T$ and $T_{DL,Synch} + T_{GI} + T_{RAC} = T$, i.e. $T_{DL} = T_{UL} = T$. As previously mentioned, embodiments of the invention are not limited to this specific choice of $T_{DL}$ and $T_{UL}$ being equal.

For simulations, each period T is decomposed into 1500 steps, and at each step, state and interactions of each node are evaluated. Nodes are able to perfectly distinguish each transmitted synchronization word, e.g. by using a long Gold sequence as synchronization words. The initial conditions correspond to the case where all nodes have randomly distributed state variables, i.e. each node is assumed to be active starting with a random phase $\Phi_i(0)$. This corresponds to the worst case scenario where initially all state variables are randomly distributed around the phase diagram. Successful synchronization is declared if all BSs form one group and all UTs another one, the first group firing $T_{UL}$ after the first, and the synchrony rate is defined as the number of successful synchronizations after $90 \cdot T$ over the number of realizations of initial conditions, which is set to 1000.

As expected from Fig. 8, the sparser network NW2 is more difficult to synchronize. Hence, the performance of the algorithm is better in NW1, i.e. synchrony rate is higher and time to synchrony is lower.

The table in Fig. 9 shows the synchrony rate and mean time to synchrony without UT-UT coupling and with UT-UT coupling for two different parameter sets. The first line of the table in Fig. 9 corresponds to not using coupling among the user terminals.

Fig. 10A shows an exemplary embodiment of an inventive apparatus which could be located, for example, in a base station or a user terminal. The apparatus 1000 comprises a receiver 1010, a processing unit 1020 and a transmitter 1030. The processing unit 1020 is implemented to control the receiver 1010 and the transmitter 1030, for example, to change from one control state to another control state. The processing unit 1020 increases an internal signal value, for example, a phase $\Phi$, according to a first function or phase function, being in a listen control state, shortly referred to as listen state. Being in the listen state, the receiver 1010 is ready to receive a first synchronization signal 1040 from another device, to decode the first synchronization signal 1040 and after successful reception or detection of the synchronization signal to send a detection signal 1050 to the processing unit 1020. A detection of the synchronization signal can be performed, for example, by a matched filter or a correlation detector with the correlation peak being, for example, the detection signal 1050. the processing unit 1020 is also implemented to modify the internal signal value according to the second function upon the reception of the detection signal 1050 being in the listen state, the second function being, for example, the phase response curve or a coupling function. The processing unit is further implemented to compare the internal signal value with a given threshold value, for example, $\Phi_{threshold}$, and as soon as the internal signal value equals the threshold value, to change into a next control state. The instant, when the internal signal value reaches the threshold value is also referred to as the firing instant or shortly "fire". In the original firefly concept, the firing corresponded to the immediate transmission of the synchronization pulse. Within embodiments of the present invention, "fire" is to be understood as having reached the threshold value. Dependent on whether the state machine of the apparatus comprises a wait state or not, the apparatus can be implemented to change into the transmit state and start transmitting immediately after firing or change into the wait state, and wait a given waiting time before changing into the transmit state and to start transmitting the second synchronization signal. Different embodiments of the state machine of the inventive apparatus will be discussed in more detail, based on Fig. 10B.

Furthermore, the processing unit 1020 is implemented to change directly or after the waiting time to the transmit state, and also to control the transmitter 1030 to change into the transmit state, for example, by sending a generation signal 1060 to the transmitter 1030. Upon reception of the generating signal 1060 the transmitter 1030 changes into the transmit state and starts transmitting the second synchronization signal 1070. The second synchronization signal 1070 is different from the first synchronization signal 1040. Fig. 10A shows just one possible embodiment of the inventive apparatus, the apparatus can of course be implemented in a way that, for example, the receiver 1010, the processing unit 1020 and the transmitter 1030 are integrated all or partly into a single unit.

Fig. 10B shows an exemplary state machine describing an embodiment of the invention. The state machine 1080 comprises four control states, a listen state 1082 with a listening time $T_{listen}$ associated to it, a wait state 1086 with a waiting time $T_{wait}$ associated to it, a transmit state 1092 with a transmit duration which corresponds to the duration of the second synchronization signal $T_{Tx2}$ associated to it, and a refractory state 1096 with a refractory time $T_{refr}$ associated to it. In an embodiment of the present invention, the apparatus being in the listen state 1082, the processing unit increases the internal signal value $\Phi$ according to the first function, and at the same time, listens to first synchronization signals transmitted by other nodes. Having received the first synchronization signal of duration $T_{Tx1}$, the receiver 1010 decodes the first synchronization signal. For the decoding the receiver needs or uses the additional decoding time $T_{dec}$.

Being in a listen state 1082, the processing unit 1020 is implemented to modify the internal signal value $\Phi$ according to the second function in case a first synchronization signal has been received and successfully decoded by the receiver 1010. when the internal signal value $\Phi$ reaches the threshold value, in other words, event 1084 ($\Phi = \Phi_{threshold}$) occurs, the apparatus can be implemented to change into the wait state 1086. After waiting the waiting time $T_{wait}$ in the wait state, in other words, event 1088 (wait over) occurs, the processing unit can be implemented to change to the transmit state 1092. Being in transmit state 1092, the processing unit controls the transmitter to transmit the second synchronization signal 1070. After transmitting the second synchronization signal, in other words, when event 1094 (transmit over) occurs, the processing unit can be implemented to change into a refractory state 1096. After the refractory time $T_{refr}$, in other words, on event 1098 (refractory period over), the processing unit can be implemented to change back into the listen state 1082.

The apparatus 1000 is implemented to transmit or receive, but not both at the same time.

The first synchronization signal 1040 received by the apparatus corresponds to first predetermined group, to which the transmit or receive device, the apparatus belongs to, does not belong to. In other words, with regard to the WINNER system, in case the apparatus belongs to a user terminal, the apparatus would receive the downlink synchronization word 636 (Fig. 6) from the base station, the downlink synchronization word corresponding (in this case) to the first synchronization signal 1040, the base stations forming the first predetermined group to which the user terminal does not belong to, and wherein the apparatus would transmit the uplink synchronization word corresponding to the second synchronization signal 1070. The user terminals would form the second predetermined group, the user terminal belongs to.

In case the apparatus belongs to a base station, the opposite would apply. In other words, the receiver is implemented to receive the uplink synchronization word 616 from a user terminal, the uplink synchronization word now corresponding to the first synchronization signal, wherein furthermore, now the user terminals would form the first predetermined group. In this case, the apparatus would be operative to transmit the downlink synchronization signal 636 to the user terminals, wherein the downlink synchronization word would now correspond to the second synchronization signal and the base stations would now form the second group.

Different embodiments concerning the functionalities of the receiver, the processing unit and the transmitter with regard to the control states are possible. In one embodiment, the receiver can be operative to only receive and decode being in the listen state, and will not be able to receive or decode during the wait state 1086 or the refractory state 1096. In another embodiment, the receiver can be implemented to be able to receive, i.e. "listen" to the first or second synchronization signal already being in the refractory state 1096, in other embodiments, the processing unit can be also operative to even decode or start decoding being in the refractory state. Accordingly, in the embodiments the receiver can be operative being in the listen state to continue receiving and/or decoding in the listen state, which will start in the preceding refractory state 1096. Typically, the increase of the internal signal value based on the first function is only performed during the listen state. Whereas the modification according to the second function may also be performed as just explained, for example, in the wait state or the refractory state.

In alternative embodiments, the state machine can only comprise the listen state 1082 and the transmit state 1092, the listen state 1082, the wait state 1086 and the transmit state 1092, or the listen state 1082, the transmit state 1092 and the refractory state 1096. these possibilities are indicated by the broken lines shown in Fig. 10B, wherein the events for changing into the next state remain the same. For example, for the state machine, only comprising the listen state 1082 and the transmit state 1092, the processing unit is implemented to change from the listen state directly to the transmit state on the event 1084 ($\Phi = \Phi_{threshold}$), i.e. when the internal signal value reaches the threshold value. Correspondingly, in this case, the processing unit is operative to change directly from the transmit state 1092 to the listen state 1082 after the transmission of the second synchronization signal has been completed, i.e. on the event 1094 (transmit over).

In certain embodiments, for example, for user terminals in the WINNER system, the apparatus belonging to the user terminals is preferably operative to additionally receive the second synchronization signal additionally to the first synchronization signal. In other words, as the second synchronization signal corresponds to the group, the user terminal itself belongs to, the apparatus would be operative to use the downlink synchronization words from the base stations and the uplink synchronization words from other user terminals to synchronize with the base stations and the user terminals. This corresponds to the user terminal to user terminal synchronization (UT-UT synchronization) previously mentioned, and enables inter-cell synchronization without the need for direct communication between the base stations.

In certain further embodiments, the receiver (1010) is operative to detect whether the first or second synchronization signal has been received. Based on the capability of distinguishing both synchronization words, the processing unit (1020) can be operative to use a first decoding time for decoding the synchronization signal and a second synchronization time for decoding the second synchronization signal, wherein the first decoding time is different from the second decoding time. The second decoding time can be, as described for the WINNER system equation (5), shorter than the first decoding time.

Based on the distinction between both synchronization words, the processing unit can alternatively be implemented upon receiving the second synchronization signal from a third transmit or receive device belonging to the same second predetermined group to modify the internal signal value upon receiving the second synchronization signal according to a third function, wherein the third function is different to the second function.

It should be mentioned that in any case, the modification based on the second or third function leads to an increase or "jump" such that the internal signal value is higher than it would be based on the first function for the next time interval.

Referring back to Fig. 6 showing the embodiments of the apparatus adapted to comply with the super-frame preamble, the state machine for the user terminals 610 and the base stations 630 shall be described in more detail with regard to Fig. 10B.

As previously mentioned, the user terminals state machine 610 comprises three control states, the listen state 612 (Listen UL), which corresponds to the listen state 1082, the transmit state 616 (Transmit UL Synch) which corresponds to the transmit state 1092 (Transmit second Synch signal) and the refractory state 618 (Refr UL) which corresponds to the refractory state 1096 (REFR). From the point of view of the user terminal, the downlink synchronization signal word corresponds to the first synchronization signal and the uplink synchronization signal word to the second synchronization signal.

The base stations state machine 630 comprises four control states, the listen state 632 (Listen, DL) which corresponds to the listen state 1082 (LISTEN to first synchronization signal), the wait state 634 (Wait, DL) which corresponds to the wait state 1086 (WAIT), the transmit state 636 (Transmit, DL Synch), which corresponds to the transmit state 1092 (TRANSMIT second Synch signal), and the refractory state 638 (Refr, DL), which corresponds to the refractory state 1096 (REFR). From the point of view of the base station, the uplink synchronization word corresponds to the first synchronization signal and the downlink synchronization word corresponds to the second synchronization signal.

Fig. 6 shows the state machines and the durations associated to the different states for a synchronized situation. The user terminal receives 650 the downlink synchronization word 636 while it is in the listen state 612 and, furthermore, decodes 652 ($T_{UL,dec}$) while it is still in the listen state 612.

In certain embodiments the decoding time 652 ($T_{UL,dec}$) is chosen such that the user terminal finishes decoding at the same time as the internal signal value anyway reaches the threshold value according to the first function. In other words, as the instant of reaching the threshold and the instant at which the processing unit normally would modify the internal signal value according to the second function concede, i.e. both happen at the same time, a stable synchronized state is achieved. This implies that the decoding time $T_{UL,dec}$, which corresponds to the decoding time $T_{dec}$ in Fig. 10B, is chosen to correspond to the duration of the busy channel time slot $T_{BCH}$. It should be noticed however that a stable synchronization can also be achieved when the decoding time 652 is not equal to the duration $T_{BCH}$ of the broadcast channel time slot, as can be seen from the aforementioned simulation.

Correspondingly, for certain embodiments of the base station, the durations of the different states have been chosen such that the instant the internal value reaches the threshold value according to the first function coincides with the instant the processing unit otherwise would have modified the internal signal value based on the second function. The receiving time 660 for the base station corresponds to the duration of the uplink synchronization word timeslot 616 ($T_{UL,Synch}$), and the decoding time 662 ($T_{DL,dec}$) for decoding the uplink synchronization word, which corresponds to the decoding time $T_{dec}$ of Fig. 10B, corresponds to the duration of the random access channel timeslot $T_{RAC}$.

Other embodiments of the inventive apparatus for the user terminals and the base stations are possible to comply with the super-frame preamble structure. For example, another embodiment of the user terminal's state machine would only comprise the listen state 612 and the transmit state 616, the listen state 612 starting directly after the transmit state 616. Correspondingly, other embodiments of the base station's state machine can be implemented to only comprise the listen state 632 and the transmit state 636, or to comprise either the wait state 634 or the refractory state 638, additionally.

As the refractory state is advantageous to reduce the echo problem and the wait states help to improve the synchronization accuracy, preferred embodiments comprise at least one or both to increase the synchrony rate and the stability and to reduce the mean time to synchrony.

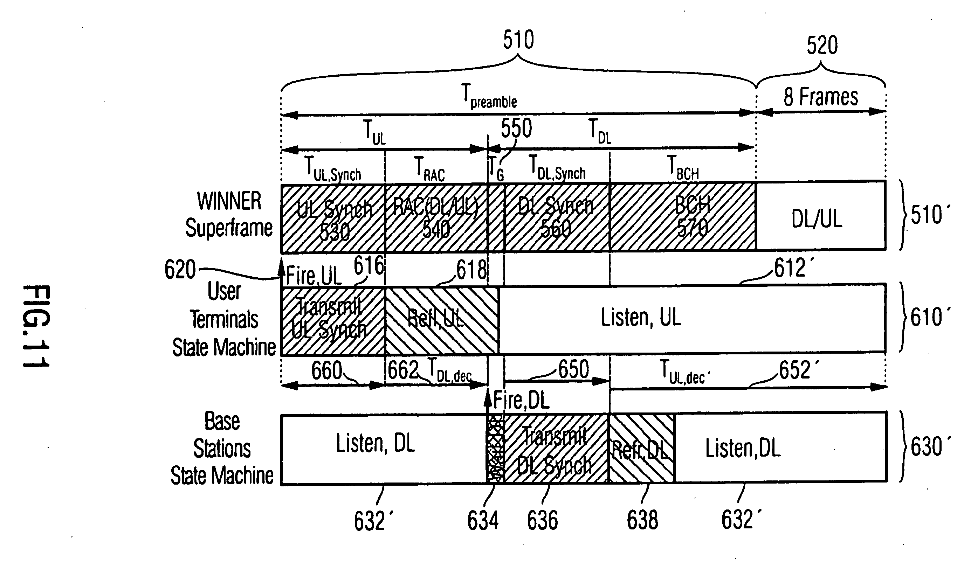

Fig. 11 shows a WINNER super-frame 510' and embodiments for user terminal state machines 610'and base stations state machine 630'. In comparison with Fig. 6, not only the super-frame preamble 510, but also the payload part 520 comprising, for example, as shown in Fig. 5, eight frames with uplink (UL) and downlink (DL) partitions. The only modification in comparison to the state machines shown in Fig. 6, is the adaptation of the duration of the listen state 612' of the user terminal and the duration of the listen state 632' of the base station.

Correspondingly, the decoding time 652' ($T_{UL,dec}$) of the user terminal has also been increased such that again, for example, the time instance of the internal signal value reaches the threshold value according to the first function coincides with the time instant the user terminal has received and decoded successfully the downlink synchronization word and would modify the internal signal value according to the second function.

The same or similar structures as shown for the preamble (510) can also be positioned, for example, at the mid or at the end of a frame for synchronizing two different predetermined groups, for example user terminals and base stations. In other words, the first and the second synchronization word can be positioned in the preamble, midamble or postamble part of a frame, and either both synchronization words together in the same part or even at different positions with regard to the frame.

From the above explanations it is obvious for a person skilled in the art, that the embodiments of the present invention can support many other frame structures and provide a means for efficiently synchronizing two predetermined groups based on the simple, yet efficient, integrate-and-fire model using two different synchronization signals.

In further embodiments of the present invention, relays additionally to, for example, the user terminals and the base stations can be introduced. The relays communicate both with Base Stations (BSs) and User Terminals (UTs), and constitute a third group of nodes. However, as they are not always present in the system, synchronization cannot rely on them. A simple way for them to join the synchronization process is to be able to follow the behavior of a BS (listening for "UT Synch" sequences) and the behavior of a UT (listening for "BS Synch" sequences). This means that at the end of a super-frame, a relay can either follow the state machine used by UTs or the state machine used by BSs.

The way this choice is done can depend on the scenario. If the network is "empty" (no UTs in the area), then relays could, for example, always follow the state machine of UTs. If the network is not empty, then relays alternatively change from UT State Machine to BS State Machine.

The drawbacks of directly applying known synchronization methods have been described and a solution which takes advantage of the separation into two groups in order to correctly split BSs and UTs has been introduced.

Depending on certain implementation requirements of the inventive methods, the inventive methods can be implemented in hardware or in software. The implementation can be performed using a digital storage medium, in particular a disc, a DVD or a CD having electronically readable control signals stored therein, which cooperate with a programmable computer system, such that the inventive methods are performed. Generally, the present invention is therefore, a computer program product with a program code stored on a machine-readable carrier, the program code be operative for performing the inventive methods when the computer program product runs on a computer. In other words, the inventive methods are therefore, a computer program having a program code for performing at least one of the inventive methods when the computer program runs on a computer.

**Claims**

1. An apparatus (1000) for synchronizing a first transmit and receive device to a second transmit and receive device, the apparatus being located in the first transmit and receive device, the apparatus comprising:

   a receiver (1010) implemented to receive the first synchronization signal (1040) from the second transmit and receive device, the first synchronization signal corresponding to a first predetermined group, to which the first transmit and receive device does not belong to;
   a transmitter (1030) implemented to transmit a second synchronization signal (1070), which is different from the first synchronization signal (1040), and corresponds to a second predetermined group to which the first transmit and receive device belongs to, wherein the second synchronization signal (1070) is after a synchronization time in synchronism with the first synchronization signal (1040) from the second transmit and receive device;
   a processing unit (1020) implemented to increase an internal signal value ($\Phi$) according to a given first function over time, to modify the internal signal value upon receiving the first synchronization signal, according to a second function and to compare the internal signal value ($\Phi$) with a given threshold value ($\Phi_{threshold}$) when the apparatus is in a listen state (1082) wherein the processing unit is further implemented:

      to control the receiver (1010) to be ready to receive the first synchronization signal (1040) from the second transmit and receive device in the listen state (1082), and

to control the transmitter (1030) to transmit the second synchronization signal (1070) in a transmit state (1092) which begins after the internal signal value has reached the threshold value (1084).

2. The apparatus (1000) according to claim 1, wherein
the receiver (1010) is further implemented to receive the first synchronization signal (1070) from a third transmit and receive device, the third transmit and receive device belonging to the second predetermined group; and
the processing unit (1020) is further implemented to modify the internal signal value upon receiving the second synchronization signal (1070) according to the second function.

3. The apparatus according to claim 1, wherein the receiver (1010) is further implemented to detect whether the first (1040) or second (1070) synchronization signal has been received.

4. The apparatus (1000) according to claim 3, wherein the receiver is implemented to use a first decoding time for decoding the first synchronization signal (1040) and a second decoding time for decoding the second synchronization signal (1070) wherein the first decoding time is different from the second decoding time.

5. The apparatus (1000) according to claim 3 or 4, wherein the processing unit (1020) is implemented to modify the internal signal value upon receiving the second synchronization signal according to a third function, the third function being different from the second function.

6. The apparatus (1000) according to one of the claims 1 to 5, wherein the processing unit (1020) is implemented to control the transmitter (1030):

to wait a waiting time ($T_{wait}$) in a waiting state (1086), the waiting time being greater than 0 and smaller than an oscillation period, the oscillation period being the time interval the internal signal value reaches the threshold value again when the apparatus does not receive any synchronization signal from any transmit and receive device, wherein the waiting state (1082) is entered when the internal signal value has reached the threshold value (1084), and
to transmit the second synchronization signal (1070) in the transmit state (1092), which begins, when the waiting time ($T_{wait}$) is over (1088).

7. The apparatus (1000) according to one of the claims 1 to 6, wherein the processing unit is implemented such that after the transmission of the second synchronization signal (1070) in the transmit state (1092) the processing unit (1020) remains for a refractory time ($T_{refr}$) in a refractory state (1096) before entering the listen state (1082), the refractory time being greater than 0 and smaller than an oscillation period, the oscillation period being the time interval the internal signal value reaches the threshold value again, when the apparatus does not receive any synchronization signal from any transmit and receive device.

8. The apparatus according to one of the claims 1 to 7, wherein the processing unit (1020) is implemented such that an oscillating period corresponds to a duration of a frame (550) or a part of a frame (510), wherein the oscillation period is the time interval the internal signal value reaches the threshold value again when the apparatus does not receive any synchronization signal from any transmit and receive device.

9. The apparatus according to claim 8, wherein the processing unit (1020) is implemented to control the transmitter (1030) such that the transmitter transmits a second synchronization signal (1070) in a preamble (510), midamble or postamble part of the frame (500).

10. The apparatus (1000) according to claim 9, wherein the preamble (510) comprises the following five time slots:

a first timeslot (530) for transmitting an uplink synchronization word, a second timeslot (540) for a random access channel, a third timeslot (550) for a guard interval, a fourth timeslot (560) for a downlink synchronization word and a fifth timeslot (570) for a broadcast channel, and
wherein the first transmit and receive device is a base station, wherein the first synchronization signal (1040) corresponds to the uplink synchronization word (UL Synch) and a duration of the first synchronization word ($T_{Tx1}$) corresponds to the duration of the first timeslot ($T_{UL,Synch}$) wherein the second synchronization signal (1070) corresponds to the downlink synchronization word (DL Synch) and a duration of the second synchronization signal ($T_{Tx2}$) correspond to the duration of the fourth timeslot ($T_{DL,Synch}$), and wherein a waiting time ($T_{wait}$) associated to a wait state (1086) corresponds to the duration ($T_{GI}$) of the third time slot.

11. The apparatus (1000) according to claim 9, wherein the preamble (510) comprises the five following timeslots:

a first timeslot (530) for transmitting an uplink synchronization word, a second timeslot (540) for a random , access channel, a third timeslot (550) for a guard interval, a fourth timeslot (560) for a downlink synchronization and a fifth timeslot (570) for a broadcast channel, and
wherein the first transmit and receive device is a user terminal, wherein the first synchronization signal (1040) corresponds to the downlink synchronization word (DL Synch) and a duration of the first synchronization signal ($T_{Tx1}$) corresponds to the duration ($T_{DL,Synch}$) of the fourth timeslot, wherein the second synchronization signal (1070) corresponds to an uplink synchronization word (UL Synch) and a duration of the second synchronization signal ($T_{Tx2}$) corresponds to the duration ($T_{UL}$, Synch) of the first time slot.

12. The apparatus (1000) according to claim 11, wherein a decoding time ($T_{dec,}T_{UL,dec}$) used by the receiver (1010) to decode thee first synchronization signal (1040) corresponds to the duration ($T_{BCH}$) of the fifth timeslot.

13. The apparatus (1000) according to claim 11, wherein the duration of the decoding time ($T_{dec,}T_{UL,dec'}$) used by the receiver (1010) to decode the first synchronization signal (1040) corresponds to the sum of the duration of the fifth timeslot ($T_{BCH}$) and a duration of a payload data part (520).

14. A method for synchronizing a first transmit and receive device to a second transmit and receive device, comprising the following steps:

receiving in a listen state (1082) a first synchronization signal (1040) from the second transmit and receive device, the first synchronization signal corresponding to a first predetermined group to which the first transmit and receive device does not belong to;
increasing in the listen state (1082) an internal signal value ($\Phi$), according to a given first function over time;
modifying in the listen state (1082) the internal signal value upon receiving the first synchronization signal according to a second function;
comparing in the listen state (1082) the internal signal value ($\Phi$) with a given threshold value ($\Phi_{threshold}$) ; and
transmitting a second synchronization signal after the internal signal value ($\Phi$) has reached the threshold value ($\Phi_{threshold}$) wherein the second synchronization signal (1070) is different from the first synchronization signal (1040) and corresponds to a second predetermined group to which the first transmit and receive device belongs to, wherein the second synchronization signal (1070) is after a synchronization time in synchronism with a first synchronization signal (1040) from the second transmit and receive device.

15. A computer program having a program code for performing a method in accordance with claim 14, when the program runs on a computer.

**Patentansprüche**

1. Eine Vorrichtung (1000) zum Synchronisieren eines ersten Sende- und Empfangsgeräts auf ein zweites Sende- und Empfangsgerät, wobei die Vorrichtung in dem ersten Sende- und Empfangsgerät angeordnet ist, wobei die Vorrichtung folgende Merkmale aufweist:

einen Empfänger (1010), der dahin gehend implementiert ist, das erste Synchronisationssignal (1040) von dem zweiten Sende- und Empfangsgerät zu empfangen, wobei das erste Synchronisationssignal einer ersten vorbestimmten Gruppe entspricht, der das erste Sende- und Empfangsgerät nicht angehört;
einen Sender (1030), der dahin gehend implementiert ist, ein zweites Synchronisationssignal (1070) zu senden, das sich von dem ersten Synchronisationssignal (1040) unterscheidet und einer zweiten vorbestimmten Gruppe entspricht, der das erste Sende- und Empfangsgerät angehört, wobei sich das zweite Synchronisationssignal (1070) nach einer Synchronisationszeit im Gleichlauf mit dem ersten Synchronisationssignal (1040) von dem zweiten Sende- und Empfangsgerät befindet;
eine Verarbeitungseinheit (1020), die dahin gehend implementiert ist, einen internen Signalwert ($\Phi$) gemäß einer gegebenen ersten Funktion über die Zeit zu erhöhen, den internen Signalwert auf einen Empfang des ersten Synchronisationssignals hin gemäß einer zweiten Funktion zu modifizieren und den internen Signalwert ($\Phi$) mit einem gegebenen Schwellwert ($\Phi_{threshold}$) zu vergleichen, wenn sich die Vorrichtung in einem Zuhörzustand (1082) befindet, wobei die Verarbeitungseinheit ferner dahin gehend implementiert ist:

den Empfänger (1010) dahin gehend zu steuern, dass er bereit ist, das erste Synchronisationssignal (1040) von dem zweiten Sende- und Empfangsgerät in dem Zuhörzustand (1082) zu empfangen, und

den Sender (1030) dahin gehend zu steuern, das zweite Synchronisationssignal (1070) in einem Sendezustand (1092) zu senden, der beginnt, nachdem der interne Signalwert den Schwellwert (1084) erreicht hat.

2. Die Vorrichtung (1000) gemäß Anspruch 1, bei der

der Empfänger (1010) ferner dahin gehend implementiert ist, das erste Synchronisationssignal (1070) von einem dritten Sende- und Empfangsgerät zu empfangen, wobei das dritte Sende- und Empfangsgerät der zweiten vorbestimmten Gruppe angehört; und

die Verarbeitungseinheit (1020) ferner dahin gehend implementiert ist, den internen Signalwert auf einen Empfang des zweiten Synchronisationssignals (1070) hin gemäß der zweiten Funktion zu modifizieren.

3. Die Vorrichtung gemäß Anspruch 1, bei der der Empfänger (1010) ferner dahin gehend implementiert ist, zu erfassen, ob das erste (1040) oder das zweite (1070) Synchronisationssignal empfangen wurde.

4. Die Vorrichtung (1000) gemäß Anspruch 3, bei der der Empfänger dahin gehend implementiert ist, eine erste Decodierzeit zum Decodieren des ersten Synchronisationssignals (1040) und eine zweite Decodierzeit zum Decodieren des zweiten Synchronisationssignals (1070) zu verwenden, wobei sich die erste Decodierzeit von der zweiten Decodierzeit unterscheidet.

5. Die Vorrichtung (1000) gemäß Anspruch 3 oder 4, bei der die Verarbeitungseinheit (1020) dahin gehend implementiert ist, den internen Signalwert auf einen Empfang des zweiten Synchronisationssignals hin gemäß einer dritten Funktion zu modifizieren, wobei sich die dritte Funktion von der zweiten Funktion unterscheidet.

6. Die Vorrichtung (1000) gemäß einem der Ansprüche 1 bis 5, bei der die Verarbeitungseinheit (1020) dahin gehend implementiert ist, den Sender (1030) dahin gehend zu steuern:

eine Wartezeit ($T_{wait}$) in einem Wartezustand (1086) zu warten, wobei die Wartezeit größer als 0 und kleiner als eine Schwingungsperiode ist, wobei die Schwingungsperiode das Zeitintervall ist, während dessen der interne Signalwert den Schwellwert erneut erreicht, wenn die Vorrichtung von keinem Sende- und Empfangsgerät ein Synchronisationssignal empfängt, wobei in den Wartezustand (1082) dann eingetreten wird, wenn der interne Signalwert den Schwellwert (1084) erreicht hat, und

das zweite Synchronisationssignal (1070) in dem Sendezustand (1092) zu senden, der beginnt, wenn die Wartezeit ($T_{wait}$) vorüber ist (1088).

7. Die Vorrichtung (1000) gemäß einem der Ansprüche 1 bis 6, bei der die Verarbeitungseinheit derart implementiert ist, dass die Verarbeitungseinheit (1020) nach dem Senden des zweiten Synchronisationssignals (1070) in dem Sendezustand (1092) eine Feuerfest-Zeit ($T_{refr}$) lang in einem Feuerfest-Zustand (1096) verbleibt, bevor sie in den Zuhörzustand (1082) eintritt, wobei die Feuerfest-Zeit größer als 0 und kleiner als eine Schwingungsperiode ist, wobei die Schwingungsperiode das Zeitintervall ist, während dessen der interne Signalwert erneut den Schwellwert erreicht, wenn die Vorrichtung von keinem Sende- und Empfangsgerät ein Synchronisationssignal empfängt.

8. Die Vorrichtung gemäß einem der Ansprüche 1 bis 7, bei der die Verarbeitungseinheit (1020) derart implementiert ist, dass eine Schwingungsperiode einer Dauer eines Rahmens (550) oder einem Teil eines Rahmens (510) entspricht, wobei die Schwingungsperiode das Zeitintervall ist, während dessen der interne Signalwert erneut den Schwellwert erreicht, wenn die Vorrichtung von keinem Sende- und Empfangsgerät ein Synchronisationssignal empfängt.

9. Die Vorrichtung gemäß Anspruch 8, bei der die Verarbeitungseinheit (1020) dahin gehend implementiert ist, den Sender (1030) derart zu steuern, dass der Sender ein zweites Synchronisationssignal (1070) in einem Präambel-Teil (510), Midambel-Teil oder Postambel-Teil des Rahmens (500) sendet.

10. Die Vorrichtung (1000) gemäß Anspruch 9, bei der die Präambel (510) die folgenden fünf Zeitschlitze aufweist:

einen ersten Zeitschlitz (530) zum Senden eines Aufwärtssynchronisationswortes, einen zweiten Zeitschlitz (540) für einen Direktzugriffskanal, einen dritten Zeitschlitz (550) für ein Schutzintervall, einen vierten Zeitschlitz (560) für ein Abwärtssynchronisationswort und einen fünften Zeitschlitz (570) für einen Rundsendekanal, und wobei das erste Sende- und Empfangsgerät eine Basisstation ist, wobei das erste Synchronisationssignal (1040) dem Aufwärtssynchronisationswort (UL Synch) entspricht, und eine Dauer des ersten Synchronisationswortes ($T_{TX1}$) der Dauer des ersten Zeitschlitzes ($T_{UL, Synch}$) entspricht, wobei das zweite Synchronisationssignal (1070) dem Abwärtssynchronisationswort (DL Synch) entspricht, und eine Dauer des zweiten Synchronisationssignals ($T_{Tx2}$) der Dauer des vierten Zeitschlitzes ($T_{DL, Synch}$) entspricht, und wobei eine Wartezeit ($T_{wait}$), die einem Wartezustand (1086) zugeordnet ist, der Dauer ($T_{GI}$) des dritten Zeitschlitzes entspricht.

11. Die Vorrichtung (1000) gemäß Anspruch 9, bei der die Präambel (510) die folgenden fünf Zeitschlitze aufweist:

einen ersten Zeitschlitz (530) zum Senden eines Aufwärtssynchronisationswortes, einen zweiten Zeitschlitz (540) für einen Direktzugriffskanal, einen dritten Zeitschlitz (550) für ein Schutzintervall, einen vierten Zeitschlitz (560) für eine Abwärtssynchronisation und einen fünften Zeitschlitz (570) für einen Rundsendekanal, und wobei das erste Sende- und Empfangsgerät eine Benutzeranschluss ist, wobei das erste Synchronisationssignal (1040) dem Abwärtssynchronisationswort (DL Synch) entspricht, und eine Dauer des ersten Synchronisationssignals ($T_{TX1}$) der Dauer ($T_{DL, Synch}$) des vierten Zeitschlitzes entspricht, wobei das zweite Synchronisationssignal (1070) einem Aufwärtssynchronisationswort (UL Synch) entspricht, und eine Dauer des zweiten Synchronisationssignals ($T_{Tx2}$) der Dauer ($T_{UL, Synch}$) des ersten Zeitschlitzes entspricht.

12. Die Vorrichtung (1000) gemäß Anspruch 11, bei dem eine Decodierzeit ($T_{dec}$, $T_{UL, dec}$), die durch den Empfänger (1010) dazu verwendet wird, das erste Synchronisationssignal (1040) zu decodieren, der Dauer ($T_{BCH}$) des fünften Zeitschlitzes entspricht.

13. Die Vorrichtung (1000) gemäß Anspruch 11, bei der die Dauer der Decodierzeit ($T_{dec}$, $T_{UL, dec'}$), die durch den Empfänger (1010) dazu verwendet wird, das erste Synchronisationssignal (1040) zu decodieren, der Summe der Dauer des fünften Zeitschlitzes ($T_{BCH}$) und einer Dauer eines Nutzdatenteils (520) entspricht.

14. Ein Verfahren zum Synchronisieren eines ersten Sende- und Empfangsgeräts auf ein zweites Sende- und Empfangsgerät, wobei das Verfahren folgende Schritte umfasst:

Empfangen, in einem Zuhörzustand (1082), eines ersten Synchronisationssignals (1040) von dem zweiten Sende- und Empfangsgerät, wobei das erste Synchronisationssignal einer ersten vorbestimmten Gruppe entspricht, der das erste Sende- und Empfangsgerät nicht angehört;
Erhöhen, in dem Zuhörzustand (1082), eines internen Signalwerts ($\Phi$) gemäß einer gegebenen ersten Funktion über die Zeit;
Modifizieren, in dem Zuhörzustand (1082), des internen Signalwerts auf einen Empfang des ersten Synchronisationssignals hin gemäß einer zweiten Funktion;
Vergleichen, in dem Zuhörzustand (1082), des internen Signalwerts ($\Phi$) mit einem gegebenen Schwellwert ($\Phi_{threshold}$) ; und
Senden eines zweiten Synchronisationssignals, nachdem der interne Signalwert ($\Phi$) den Schwellwert ($\Phi_{threshold}$) erreicht hat, wobei sich das zweite Synchronisationssignal (1070) von dem ersten Synchronisationssignal (1040) unterscheidet und einer zweiten vorbestimmten Gruppe entspricht, der das erste Sende- und Empfangsgerät angehört, wobei sich das zweite Synchronisationssignal (1070) nach einer Synchronisationszeit in im Gleichlauf mit einem ersten Synchronisationssignal (1040) von dem zweiten Sende- und Empfangsgerät befindet.

15. Ein Computerprogramm, das einen Programmcode zum Durchführen eines Verfahrens gemäß Anspruch 14 aufweist, wenn das Programm auf einem Computer abläuft.

## Revendications

1. Appareil (1000) pour synchroniser un premier dispositif d'émission et de réception avec un deuxième dispositif d'émission et de réception, l'appareil étant situé dans le premier dispositif d'émission et de réception, l'appareil comprenant:

un récepteur (1010) mis en oeuvre pour recevoir le premier signal de synchronisation (1040) du deuxième dispositif d'émission et de réception, le premier signal de synchronisation correspondant à un premier groupe prédéterminé auquel n'appartient pas le premier dispositif d'émission et de réception;
un émetteur (1030) mis en oeuvre pour émettre un deuxième signal de synchronisation (1070) qui est différent du premier signal de synchronisation (1040) et correspond à une deuxième groupe prédéterminé auquel appartient le premier dispositif d'émission et de réception, où le deuxième signal de synchronisation (1070) est, après un temps de synchronisation, en synchronisme avec le premier signal de synchronisation (1040) du deuxième dispositif d'émission et de réception;

une unité de traitement (1020) mise en oeuvre pour augmenter une valeur de signal interne ($\Phi$) selon une première fonction donnée dans le temps, pour modifier la valeur de signal interne à la réception du premier signal de synchronisation selon une deuxième fonction et pour comparer la valeur de signal interne ($\Phi$) avec une valeur de seuil donnée ($\Phi_{theshold}$) lorsque l'appareil est à l'état d'écoute (1082), où l'unité de traitement est par ailleurs mise en oeuvre:

pour commander le récepteur (1010) de manière à être prêt à recevoir le premier signal de synchronisation (1040) du deuxième dispositif d'émission et de réception à l'état d'écoute (1082), et

pour commander l'émetteur (1030) pour émettre le deuxième signal de synchronisation (1070) à l'état d'émission (1092) qui commence après que la valeur de signal interne ait atteint la valeur de seuil (1084).

2. Appareil (1000) selon la revendication 1, dans lequel
le récepteur (1010) est par ailleurs mis en oeuvre pour recevoir le premier signal de synchronisation (1070) d'un troisième dispositif d'émission et de réception, le troisième dispositif d'émission et de réception appartenant au deuxième groupe prédéterminé; et

l'unité de traitement (1020) est par ailleurs mise en oeuvre pour modifier la valeur de signal interne à la réception du deuxième signal de synchronisation (1070) selon la deuxième fonction.

3. Appareil selon la revendication 1, dans lequel le récepteur (1010) est par ailleurs mis en oeuvre pour détecter s'il a été reçu le premier (1040) ou le deuxième (1070) signal de synchronisation.

4. Appareil (1000) selon la revendication 3, dans lequel le récepteur est mis en oeuvre pour utiliser un premier temps de décodage pour décoder le premier signal de synchronisation (1040) et un deuxième temps de décodage pour décoder le deuxième signal de synchronisation (1070), dans lequel le premier temps de décodage est différent du deuxième temps de décodage.

5. Appareil (1000) selon la revendication 3 ou 4, dans lequel l'unité de traitement (1020) est mise en oeuvre pour modifier la valeur de signal interne à la réception du deuxième signal de synchronisation selon une troisième fonction, la troisième fonction étant différente de la deuxième fonction.

6. Appareil (1000) selon l'une des revendications 1 à 5, dans lequel l'unité de traitement (1020) est mise en oeuvre pour commander l'émetteur (1030):

pour attendre pendant un temps d'attente ($T_{wait}$) dans un état d'attente (1086), le temps d'attente étant supérieur à 0 et inférieur à une période d'oscillation, la période d'oscillation étant l'intervalle de temps jusqu'à ce que la valeur de signal interne atteigne à nouveau la valeur de seuil lorsque l'appareil ne reçoit aucun signal de synchronisation de l'un ou l'autre dispositif d'émission et de réception, où l'état d'attente (1082) est entré lorsque la valeur de signal interne a atteint la valeur de seuil (1084), et

pour émettre le deuxième signal de synchronisation (1070) à l'état d'émission (1092) qui commence lorsque le temps d'attente ($T_{wait}$) est écoulé (1088).

7. Appareil (1000) selon l'une des revendications 1 à 6, dans lequel l'unité de traitement est mise en oeuvre de sorte que, après l'émission du deuxième signal de synchronisation (1070) à l'état d'émission (1092), l'unité de traitement (1020) reste pendant un temps réfractaire ($T_{refr}$) à l'état réfractaire (1096) avant d'entrer à l'état d'écoute (1082), le temps réfractaire étant supérieur à 0 et inférieur à une période d'oscillation, la période d'oscillation étant l'intervalle de temps jusqu'à ce que le signal de valeur interne atteigne à nouveau la valeur de seuil lorsque l'appareil ne reçoit aucun signal de synchronisation de l'un ou l'autre dispositif d'émission et de réception.

8. Appareil selon l'une des revendications 1 à 7, dans lequel l'unité de traitement (1020) est mise en oeuvre de sorte qu'une période d'oscillation corresponde à une durée d'une trame (550) ou à une partie d'une trame (510), où la période d'oscillation est l'intervalle de temps jusqu'à ce que la valeur de signal interne atteigne à nouveau la valeur de seuil lorsque l'appareil ne reçoit aucun signal de synchronisation de l'un ou l'autre dispositif d'émission et de réception.

9. Appareil selon la revendication 8, dans lequel l'unité de traitement (1020) est mise en oeuvre pour commander l'émetteur (1030) de sorte que l'émetteur émette un deuxième signal de synchronisation (1070) dans une partie de préambule (510), midambule ou postambule de la trame (500).

10. Appareil (1000) selon la revendication 9, dans lequel le préambule (510) comprend les cinq fenêtres de temps suivantes:

une première fenêtre de temps (530) pour émettre un mot de synchronisation de liaison montante, une deuxième fenêtre de temps (540) pour un canal d'accès aléatoire, une troisième fenêtre de temps (550) pour un intervalle de garde, une quatrième fenêtre de temps (560) pour un mot de synchronisation de liaison descendante et une cinquième fenêtre de temps (570) pour un canal de diffusion, et
dans lequel le premier dispositif d'émission et de réception est une station de base, dans lequel le premier signal de synchronisation (1040) correspond au mot de synchronisation de liaison montante (UL Synch) et une durée du premier mot de synchronisation ($T_{Tx1}$) correspond à la durée de la première fenêtre de temps ($T_{UL, Synch}$), dans lequel le deuxième signal de synchronisation (1070) correspond au mot de synchronisation de liaison descendante (DL Synch) et une durée du deuxième signal de synchronisation ($T_{Tx2}$) correspond à la durée de la quatrième fenêtre de temps ($T_{DL,Synch}$), et dans lequel un temps d'attente ($T_{wait}$) associé à un état d'attente (1086) correspond à la durée ($T_{GI}$) de la troisième fenêtre de temps.

11. Appareil (1000) selon la revendication 9, dans lequel le préambule (510) comprend les cinq fenêtres de temps suivantes:

une première fenêtre de temps (530) pour émettre un mot de synchronisation de liaison montante, une deuxième fenêtre de temps (540) pour un canal d'accès aléatoire, une troisième fenêtre de temps (550) pour un intervalle de garde, une quatrième fenêtre de temps (560) pour un mot de synchronisation de liaison descendante et une cinquième fenêtre de temps (570) pour un canal de diffusion, et
dans lequel le premier dispositif d'émission et de réception est un terminal d'utilisateur, dans lequel le premier signal de synchronisation (1040) correspond au mot de synchronisation de liaison descendante (DL Synch) et une durée du premier mot de synchronisation ($T_{Tx1}$) correspond à la durée ($T_{DL,Synch}$) de la quatrième fenêtre de temps, dans lequel le deuxième signal de synchronisation (1070) correspond à un mot de synchronisation de liaison montante (UL Synch) et une durée du deuxième signal de synchronisation ($T_{Tx2}$) correspond à la durée ($T_{UL,Synch}$) de la première fenêtre de temps.

12. Appareil (1000) selon la revendication 11, dans lequel un temps de décodage ($T_{dec}$, $T_{UL,dec}$) utilisé par le récepteur (1010) pour décoder le premier signal de synchronisation (1040) correspond à la durée ($T_{BCH}$) de la cinquième fenêtre de temps.

13. Appareil (1000) selon la revendication 11, dans lequel la durée du temps de décodage ($T_{dec}$, $T_{UL,dec}$) utilisé par le récepteur (1010) pour décoder le premier signal de synchronisation (1040) correspond à la somme de la durée de la cinquième fenêtre de temps ($T_{BCH}$) et une durée d'une partie de données de charge utile (520).

14. Procédé pour synchroniser un premier dispositif d'émission et de réception avec un deuxième dispositif d'émission et de réception, comprenant les étapes suivantes consistant à:

recevoir dans un état d'écoute (1082) un premier signal de synchronisation (1040) du deuxième dispositif d'émission et de réception, le premier signal de synchronisation correspondant à un premier group prédéterminé auquel n'appartient pas le premier dispositif d'émission et de réception;
augmenter à l'état d'écoute (1082) une valeur de signal interne ($\Phi$), selon une première fonction donnée dans le temps;
modifier à l'état d'écoute (1082) la valeur de signal interne à la réception du premier signal de synchronisation selon une deuxième fonction;
comparer à l'état d'écoute (1082) la valeur de signal interne ($\Phi$) avec une valeur de seuil donnée ($\Phi_{threshold}$); et
transmettre un deuxième signal de synchronisation après que la valeur de signal interne ($\Phi$) ait atteint la valeur de seuil ($\Phi_{threshold}$), où le deuxième signal de synchronisation (1070) est différent du premier signal de synchronisation (1040) et correspond à un deuxième groupe prédéterminé auquel appartient le premier dispositif d'émission et de réception, où le deuxième signal de synchronisation (1070) est, après un temps de synchronisation, en synchronisme avec un premier signal de synchronisation (1040) du deuxième dispositif d'émission et de réception.

**15.** Programme d'ordinateur présentant un code de programme pour réaliser un procédé selon la revendication 14 lorsque le programme est exécuté sur un ordinateur.

FIG.1A

FIG.1B

FIG.2A

FIG.2D

FIG.2B

FIG.2C

refractory period over

$\phi = \phi_{threshold}$    wait over    transmit over

LISTEN    WAIT    TRANSMIT    REFR

## FIG.3A

$\phi(t)$

fire    fire

listen    wait    Tx    refr    listen

$\phi_{threshold}$

decode

T    T

0    t

310

## FIG.3B

Tx → Channel h(t) → Rx

Transmitted signal x(t):

Received signal:
$y(t) = h(t) * x(t + T_0)$

Matched filter output:
$\Lambda(t) = x(-t) * y(t)$

FIG.3C

FIG.4A

FIG.4B

R4

4 $T_{Tx}$

R6

6 Transmitters

Transmit

WAIT

A

REFR

5 $T_{Tx}$

R5

Receivering

## FIG.4C

R3 3
Receivers

R1

1

$T_{Tx}$

WAIT

Transmit

FIRE

B

REFR

LISTEN

4 R4

$T_{Tx}$

R6 6
Transmitters

## FIG.4D

Full System Bandwidth

Time

500

Duplex Guard Time = 19,2 μs

8 Frames = 8*0,6912 ms = 5,53ms

0,6912 ms
= 6 Chunks + 2*Guard Time

1664 Sub-Carriers
= 104 Chunks

| Chunk | | | | |
|---|---|---|---|---|
| #1 | 105 | 209 | 313 | 417 | 521 |
| 2 | 106 | 210 | 314 | 418 | 522 |
| 3 | | | 315 | | |
| 4 | | | 316 | | |
| 5 | | | 317 | | |
| 6 | | | 318 | | |
| 99 | | | 411 | | |
| 100 | | | 412 | | |
| 101 | | | 413 | | |
| 102 | | | 414 | | |
| 103 | 107 | 311 | 415 | 519 | 623 |
| 104 | 208 | 312 | 416 | 520 | 624 |

Chunk

UChunk

520

Frame

DL UL DL DL UL DL (UL) DL

DAC (Contention Based)

510

Preamble (cell wide)

Frequency

550 GI

BCH (DL)

DL Synch

PAC (UL/DL)

UL Synch

570

560

540

530

FIG.5

EP 1 936 837 B1

FIG.6

Legend: ☐ Base Stations    ◯ User Terminals

FIG.7A                              FIG.7B

FIG.8

| | NW1 | NW2 |
|---|---|---|
| without UT-UT coupling | 99.25%  11.32· $T$ | 92.20%  15.54·$T$ |
| inhibitory ($\alpha_{UT-UT}$=0.74,$\beta_{UT-UT}$=-0.01) | 99.40%  11.32· $T$ | 98.40%  16.53·$T$ |
| exhitatory ($\alpha_{UT-UT}$=1.35,$\beta_{UT-UT}$=0.02) | 99.60%  11.83· $T$ | 99.25%  17.69·$T$ |

FIG.9

1010             1020             1030

1040    | - receive<br>first<br>synch.signal |   1050   | -control<br>-first fuction<br>-second function<br>-comparison |   1060   | - transmit<br>second<br>synch.signal |   1070

1070

1000

# FIG.10A

32

refractory period over
/1098

$\phi=\phi_{threshold}$
1084

wait over
1088

transmit over
1094

LISTEN
to 1st synch.
signal

WAIT

TRANSMIT
2nd synch.
signal

REFR

1082

1086

1092

1096

$T_{listen}$

$T_{wait}$

$T_{tx2}$

$T_{refr}$

Receiving
$T_{tx1}$

Decoding
$T_{dec}$

1080

FIG.10B

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 05015250 A
- EP 1744472 A
- EP 05027911 A
- EP 1802013 A

### Non-patent literature cited in the description

- **W. LEWANDOWSKI ; C. THOMAS.** GPS tune transfer. *Proc. of the TEEE,* July 1991, vol. 79 (7), 991-999
- **D. MILLS.** Internet time Synchronization: the network time protocol. *IEEE Transactions an Communications,* October 1991, vol. 39, 1482-1493
- **A. TYRRELL ; G. AUER ; C. BETTSTETTER.** Firefly synchronization in ad hoc networks. *Proc. of 3rd MiN-EMA workshop,* February 2006